# EUROPÄISCHE PATENTSCHRIFT

(11) **EP 3 694 954 B1**
(45) Veröffentlichungstag und Bekanntmachung des Hinweises auf die Patenterteilung: **31.03.2021**
(21) Anmeldenummer: 18833029.4
(22) Anmeldetag: 19.12.2018
(51) Int. Cl.: C09K 17/12, C04B 28/26, C01B 33/157, C01B 33/152, E02D 3/12, C09K 17/46, C01B 33/154, C04B 12/04, C04B 111/00

(54) **WÄSSRIGE ZUSAMMENSETZUNG ZUR BILDUNG EINES GELS, DEREN VERWENDUNG ALS AUCH VERFAHREN ZUR HERSTELLUNG DERSELBEN**
AQUEOUS COMPOSITION FOR FORMING A GEL, USE THEREOF, AND METHOD FOR PRODUCING SAME
COMPOSITION AQUEUSE POUR LA FORMATION D'UN GEL, SON UTILISATION ET SON PROCÉDÉ DE PRODUCTION

(30) Priorität: 20.12.2017 DE 102017130688
(43) Veröffentlichungstag der Anmeldung: 19.08.2020
(73) Patentinhaber: Wöllner GmbH, 67065 Ludwigshafen (DE)
(72) Erfinder: WEISS, Matthias, 67065 Ludwigshafen am Rhein/Rheingönheim (DE); LIND, Jörg, 67067 Ludwigshafen (DE); HENSEL, Peter, 67098 Bad Dürkheim (DE)
(74) Vertreter: Geskes, Christoph
(86) Internationale Anmeldenummer: PCT/EP2018/085810
(87) Internationale Veröffentlichungsnummer: WO 2019/121892

(56) Entgegenhaltungen:
- DE-A1- 2 600 625
- DE-A1- 10 218 771
- DE-A1- 19 858 004
- US-A- 4 759 665
- ANONYMOUS: "JIS 1408:1966 sodium silicate (english version)", JAPANESE INDUSTRIAL STANDARD, JAPANESE STANDARD ASSOCIATION, JP , Bd. JIS 1408-1966 1. Januar 1966 (1966-01-01), Seite 1, XP009511899, Gefunden im Internet: URL:https://webdesk.jsa.or.jp/books/W11M00 90/index/?bunsyo_id=JIS%20K%201408:1966 [gefunden am 2019-03-15]

## Beschreibung

Die vorliegende Erfindung betrifft eine wässrige Zusammensetzung zur Bildung eines Gels, insbesondere eines Weichgels, einer Verwendung dieser wässrigen Zusammensetzung zur Bildung einer Dichtsohle durch Injektion in Bodenmaterial unter Bildung eines Gels, des Weiteren eine Dichtsohle als auch eine Baugrube mit einer Dichtsohle, hergestellt mit der erfindungsgemäßen wässrigen Zusammensetzung, als auch ein Verfahren zur Herstellung der wässrigen Zusammensetzung.

Baugrund, gleich ob für industrielle Bebauung, Wohnbebauung, Ingenieurbau oder für Infrastrukturen, ist ein wertvolles Gut. Gleichwohl sollen Bauvorhaben gleich welcher Art auch an Stellen verwirklicht werden, an welchen eigentlich kein für eine Bebauung tauglicher Baugrund vorliegt. In diesem Fall müssen Baugrundverbesserungen vorgenommen werden. Insbesondere bei Errichtung von Baugruben unterhalb des Grundwasserspiegels treten dabei Probleme auf. Eine solche Baugrube muss dann über eine Abdichtung mit einer Dichtsohle abgedichtet werden, üblicherweise im Injektionsverfahren. Diese bildet innerhalb einer Baugrube eine im Wesentlichen horizontal verlaufende Sperre, die das Eindringen von Grundwasser vermeidet. Baugruben weisen oftmals eine vertikal verlaufende Baugrubenumschließung auf, insbesondere in dem Fall, in welchem der Grundwasserspiegel höher liegt als eine vorgesehene Baugrubenbasis, die auch als Baugrubensohle bezeichnet wird. Aber auch zur Sicherung von Altlasten und Deponien sind Abdichtungen notwendig, sei es ebenfalls in Form von Dichtsohlen, oder aber weitergehend von Abkapselungen, so dass man bei einer Vollabkapselung auch von einer Abdichtung in Kuchenform sprechen kann. Grundsätzlich umfasst der Begriff Abdichtung im Sinne der vorliegenden Erfindung jegliche Arten von Abdichtungen in einem Bodenmaterial mindestens von einer Seite her (zum Beispiel in Form einer Dichtsohle, insbesondere zum Grundwasserschutz, beispielsweise bei einer Deponie, oder zur Verhinderung des Eindringens von Grundwasser, beispielsweise in einer Baugrube), aber auch von zwei, drei oder mehr Seiten, auch in abgeschlossener Form (Teil- oder Vollabkapselung) in beide Richtungen, je nach Anwendungsfall.

Verfahren zur Herstellung einer horizontal verlaufenden Dichtsohle in Bodenmaterial sind vielfältig bekannt. Beispielsweise kann Zement in einem Injektionsverfahren in Bodenmaterial in einem Bodenbereich unterhalb der Sohle einer Baugrube eingebracht werden. Alternativ zu Zement sind auch Injektionsverfahren bekannt, bei denen ein wassersperrendes Gel, insbesondere ein Weichgel, ausgebildet wird. Solche Verfahren können beispielsweise aus Lösungen auf Basis von Wasserglas oder aber von Kieselsolen hergestellt werden. Dabei kann vor der Injektion mit Wasserglas oder Kieselsol eine Zementinjektion vorgenommen werden, um ein Aufschwimmen der Gelsohle, die üblicherweise als Weichgelsohle bezeichnet wird, zusammen mit Bodenmaterial zu vermeiden. Bei Zementinjektionen ist besonders nachteilig, dass stark alkalisches, als ätzend eingestuftes Calciumhydroxid gebildet wird, wodurch zudem die Gefahr der Erhöhung des pH-Wertes des Grundwassers besteht.

Eine Abdichtung mittels einer Dichtsohle auf Wasserglasbasis erfolgt üblicherweise unter Einsatz von einer Natriumaluminatlösung, welche die eigentliche Gelbildung im Wasserglas initiiert. Daher wird eine solche Natriumaluminatlösung allgemein als Reaktiv, auch Härter genannt, angesprochen. Jedoch ist der pH-Wert einer Lösung aus Wasserglas und Natriumaluminat stark alkalisch und sehr viel höher als ein üblicher pH-Wert des Grundwassers. Zudem wird vermehrt insbesondere von Behörden gefordert, dass nur noch geringe Mengen an Aluminium in das Grundwasser gelangen dürfen. Aus den vorgenannten Gründen werden entsprechende Bauvorhaben in einigen Regionen in Deutschland, in welchen eine Dichtsohle auf Wasserglasbasis unter Einsatz einer Natriumaluminatlösung als Reaktiv oder aber auf Basis von Zement vorgesehen ist, unter Umständen zum Schutz des Grundwassers nicht mehr genehmigt.

Um diese Probleme zu umgehen, schlägt die DE 198 58 004 A1 vor, ein nicht alkalisches, gelbildendes Gemisch zum Abdichten und Verfestigen von Böden gegen Durchfluss von Wasser in Bau- und Tiefbauobjekten, zur Abdichtung von in den Boden eingebauten Ingenieursobjekten sowie zur Abkapselung von Altlasten und Deponien vorzusehen, welches aus Wasserglas, Wasser, saurem Reaktiv, anionischem Polyelektrolyt und Zusatzstoffen besteht. Dabei werden pH-Werte vorzugsweise in einem Bereich von 2 bis 4 eingestellt. Als saures Reaktiv wird konzentrierte Schwefelsäure eingesetzt. Nachteilig an diesem Verfahren ist allerdings insbesondere, dass gerade bei übersäuerten Böden durch den Eintrag einer derart sauren Lösung die Übersäuerung noch verstärkt wird, so dass dieses Verfahren durchaus noch mehr Nachteile in Hinblick auf den Schutz des Grundwassers und der Umwelt mit sich bringen dürfte als die bekannten Verfahren unter Einsatz einer Natriumaluminatlösung als Reaktiv.

Die DE 102 18 771 A1 schlägt ein Verfahren zur Bildung einer Dichtsohle in Form eines Weichgels unter Einsatz nicht von Wasserglas, sondern von Kieselsol vor. Dabei werden als Reaktiv verschiedene Metallsalze eingesetzt. Der pH-Wert der eingesetzten, gelbildenden Mischung soll in einem Bereich zwischen 7 und 9 liegen. Nachteilig an dem Einsatz einer solchen, auf Kieselsol basierenden Mischung als Injektionsmedium ist jedoch, dass Metallsalze mit der Zeit ausgewaschen werden und ins Grundwasser übergehen, wie dies auch bei dem Einsatz einer Natriumaluminatlösung zur Härtung eines Wasserglases der Fall ist. Zudem ist das dort eingesetzte Kieselsol ein teurer Ausgangsstoff, da dieses üblicherweise zunächst über einen Ionenaustauscher hergestellt werden muss, weshalb das dort vorgeschlagene Verfahren nicht wirtschaftlich sein dürfte.

DE 26 00 625 A1 offenbart ein Verfahren zum Befestigen oder Konsolidieren von Böden durch Einführen beziehungsweise Einspritzen eines Härtungsmittels, wobei ein Lösungsmittel verwendet wird, und wobei die Lösung so vermischt wird, dass der pH-Wert in einem Bereich zwischen schwach sauer und schwach alkalisch liegt.

Es ist daher Aufgabe der vorliegenden Erfindung, eine Zusammensetzung zur Bildung eines Gels, welches insbesondere zur Abdichtung von Baugruben mit einer Dichtsohle bzw. zur Herstellung einer Dichtsohle geeignet ist, zur Verfügung zu stellen, welches die aus dem Stand der Technik bekannten Nachteile nicht aufweist. Dabei steht insbesondere der Schutz des Grundwassers im Vordergrund.

Diese Aufgabe wird erfindungsgemäß gelöst durch eine wässrige Zusammensetzung zur Bildung eines Gels, bevorzugt eines Weichgels, umfassend mindestens ein Wasserglas mit einem Molmodul in einem Bereich von etwa 2,0 bis etwa 4,0 und mindestens ein erstes Reaktiv, nämlich mindestens eine anorganische Säure und/oder mindestens eine organische Säure, und mindestens ein zweites Reaktiv, nämlich mindestens einen Ester, ausgewählt aus einer Gruppe umfassend Methylester, Ethylester und/oder Propylester der Ascorbinsäure, Essigsäure und Dicarbonsäureester mit Kohlenstoffketten mit 1 bis 6 Kohlenstoffatomen, Triglyceride, Propylencarbonat, Triacetin oder dibasische Ester, wobei der pH-Wert der Zusammensetzung in einem Bereich von etwa 7 bis etwa 10,5, bevorzugt bis etwa 10, noch weiter bevorzugt bis genau 10, liegt. Der pH-Wert wird unmittelbar, d.h. maximal 5 Minuten nach Herstellung der Zusammensetzung und vollständiger Zugabe des mindestens einen Reaktives bestimmt. In der Regel erhöht er sich nach der Herstellung der Zusammensetzung minimal in einem weiter unten beschriebenen einstufigen Verfahren, und erniedrigt sich nach Herstellung der Zusammensetzung in einem weiter unten beschriebenen zweistufigen Verfahren nach Zusatz mindestens eines zweiten Reaktives, insbesondere in Form eines Esters, etwas, um sich dann nach 24 bis 48 Stunden auf einen Wert im Wesentlichen entsprechend dem pH-Wert nach Herstellung der Zusammensetzung einzupendeln.

Soweit in der vorliegenden Erfindung der Begriff "etwa" oder "im Wesentlichen" im Zusammenhang mit Werten, Wertebereichen oder werthaltigen Begriffen verwendet wird, versteht hierunter der angesprochene Fachmann dasjenige, was dieser in dem gegebenen Zusammenhang als fachmännisch üblich ansehen wird. Insbesondere sind Abweichungen der angegebenen Werte, Wertebereiche oder werthaltigen Begriffe von +/- 10 %, bevorzugt +/- 5 %, weiter bevorzugt +/- 2 %, von dem Begriff "etwa" oder "im Wesentlichen" umfasst. Soweit verschiedene Bereiche für Mengenangaben in Bezug auf Bestandteile und Definitionen der erfindungsgemäßen Zusammensetzung in der vorliegenden Erfindung angegeben sind, sind die Untergrenzen und die Obergrenzen der verschiedenen Bereiche in Bezug auf den jeweiligen Bestandteil und die jeweilige Definition miteinander kombinierbar.

Durch die Vermeidung des Einsatzes von Metallsalzen als Reaktiv wird insbesondere ein Übertritt von Metallkationen durch Auswaschung über längere Zeiträume in Grundwasser vermieden. Zudem wird durch den eingestellten pH-Wert keine möglicherweise vorhandene Übersäuerung des Bodenmateriales unterstützt. Durch den Einsatz mindestens eines Wasserglases mit einem Molmodul in einem Bereich von etwa 2,0 bis etwa 4,0 wird zudem die Menge von Alkalisilikaten im Gel reduziert, wodurch die Gefahr eines Übertrittes von Alkalikationen in das Grundwasser, beispielsweise ausgelöst durch Reaktionen mit dem umgebenden Bodenmaterial, reduziert wird. Zudem ist es mit der erfindungsgemäßen wässrigen Zusammensetzung möglich, sogenannte Kippzeiten einzustellen, die ausreichend sind, um eine gute Verarbeitung der wässrigen Zusammensetzung vor Ort zu ermöglichen. Das mit der erfindungsgemäßen Zusammensetzung bildbare Gel ist ein Weichgel, insbesondere ein elastisches Weichgel, welches im Vergleich zu Hartgelen feststoffärmer ist.

Das Molmodul sagt aus, in welchem Molverhältnis Siliziumdioxid und Alkalioxid vorliegen. Das Molmodul wird auch Molverhältniszahl (MVZ) genannt. Der erfindungsgemäß gewählte Bereich liegt am oberen Ende der sogenannten Untergruppe der neutralen Wassergläser und deckt den daran anschließenden Bereich bis zur Untergrenze der Untergruppe der hochkieselsauren Wassergläser ab. Besonders bevorzugt im Sinne der vorliegenden Erfindung ist das Molmodul gewählt als in einem Bereich von etwa 3,35 bis etwa 3,95, weiter bevorzugt als in einem Bereich von etwa 3,4 bis etwa 3,9, liegend.

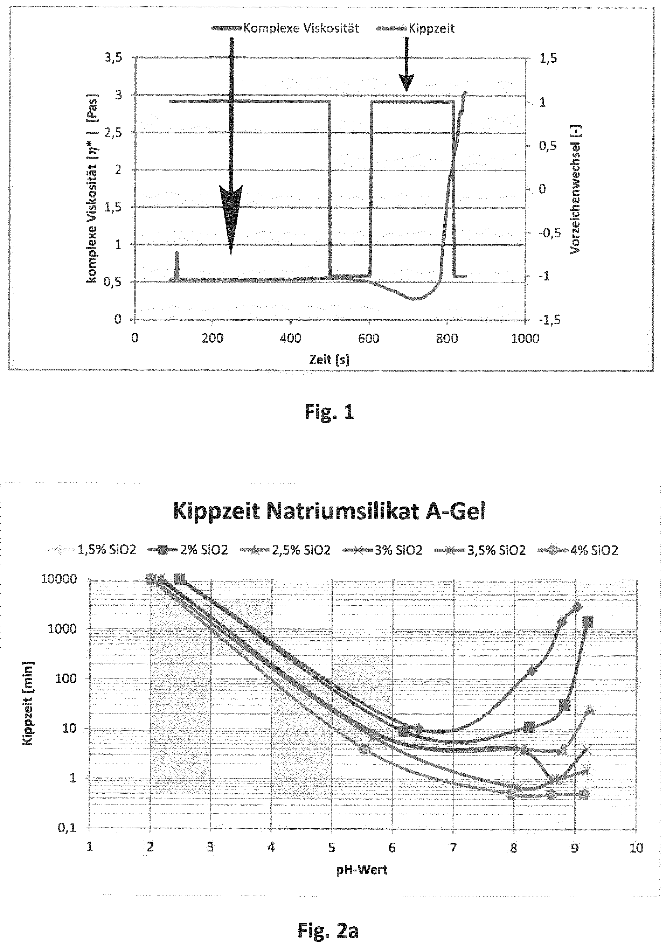

Unter Kippzeit wird die Zeit verstanden, in der eine Injektionslösung zur Bildung einer Dichtsohle noch pumpbar bzw. injizierbar in ein Bodenmaterial ist. Sie kann auch als Verarbeitungszeit angesprochen werden. Oft wird sie auch als die Zeit beschrieben, in der eine Injektionslösung beim Kippen eines Bechers noch flüssig ausläuft. Eine einheitliche Methode zur Bestimmung dieser wesentlichen Kenngröße existiert nicht. In der vorliegenden Erfindung wird die Kippzeit bestimmt durch eine viskosimetrische Kippzeitbestimmung. Diese erfolgte mit einem kugelgelagerten Oszillationsrheometer HAAKE Viskotester IQ, bezogen über die Firma Thermo Fischer Scientific Inc., Niederlassung Karlsruhe, Deutschland, mittels welchem die komplexe Viskosität über die Zeit ermittelt wurde. Die ermittelten Messdaten wurden über eine Software eingelesen und ausgewertet. Dabei erfolgte zunächst eine Glättung mittels eines Mittelwertfilters mit einer Fenstergröße von 7 Messpunkten, wobei im Anschluss die Ableitung einer geglätteten Kurve gebildet und diese wiederum mit einem Mittelwertfilter mit einer Fenstergröße von 5 Datenpunkten geglättet wurde. Anschließend wurde durch Ableitung die Steigung der Kurve der komplexen Viskosität ermittelt dahingehend, ob diese positiv oder negativ ist, und dies dann auch für die nächsten 35 Datenpunkte fortgeschrieben. Dabei durften maximal 5 Datenpunkte der ersten Ableitung positiv sein. Als weitere Randbedingung musste die komplexe Viskosität 10 Datenpunkte später geringer sein als die aktuelle komplexe Viskosität. Für die Wahl der richtigen Kippzeit wurde dann noch der Vorzeichenwechsel graphisch erfasst. Ein Beispiel einer solchen Ermittlung der Kippzeit aus der komplexen Viskosität im Sinne der vorliegenden Erfindung ist in Fig. 1 angegeben.

Die erfindungsgemäße wässrige Zusammensetzung weist variabel einstellbare Kippzeiten in einem Bereich von etwa 1 Minute bis etwa 120 Minuten, bevorzugt in einem Bereich von etwa 10 Minuten bis etwa 100 Minuten, weiter bevorzugt in einem Bereich von etwa 30 Minuten bis etwa 90 Minuten, auf.

In der wässrigen Zusammensetzung ist mindestens ein Wasserglas zugegen. Es können jedoch auch Mischungen verschiedener Wassergläser eingesetzt werden, beispielsweise verschiedener Wassergläser mit unterschiedlichen Molmodulen in den angegebenen erfindungsgemäßen und weiter bevorzugten Bereichen. Bevorzugt ist das mindestens eine Wasserglas ausgewählt aus einer Gruppe umfassend Kaliumwasserglas und Natriumwasserglas, bevorzugt ist das mindestens eine Wasserglas ein Natriumwasserglas. Besonders bevorzugt wird mindestens ein Natriumwasserglas, weiter bevorzugt genau ein Natriumwasserglas, eingesetzt mit einem Molmodul in einem Bereich von etwa 3,2, bevorzugt etwa 3,4, bis etwa 3,9, weiter bevorzugt in einem Bereich von etwa 3,42 bis etwa 3,85. Derartige Natriumwassergläser zeigen aus der komplexen Viskosität, wie oben beschrieben, ermittelte Kippzeitkurven in der wässrigen Gesamtzusammensetzung, welche eher flach verlaufen, wodurch sich längere Kippzeiten ergeben. Besonders bevorzugt wird mindestens ein Natriumwasserglas, bevorzugt genau ein Natriumwasserglas, mit einem Molmodul in einem Bereich von etwa 3,4 bis etwa 3,5 eingesetzt. Ein solches mindestens ein Natriumwasserglas ist besonders bevorzugt bei einem einstufigen Herstellungsverfahren der erfindungsgemäßen wässrigen Zusammensetzung, wie weiter unten beschrieben, eingesetzt. Weiter bevorzugt wird mindestens ein Natriumwasserglas, bevorzugt genau ein Natriumwasserglas, mit einem Molmodul in einem Bereich von etwa 3,2 bis etwa 3,9, weiter bevorzugt in einem Bereich von etwa 3,3 bis etwa 3,5 oder von etwa 3,8 bis etwa 3,9, eingesetzt. Ein solches Natriumwasserglas ist besonders bevorzugt bei Herstellung der erfindungsgemäßen wässrigen Zusammensetzung in einem zweistufigen Verfahren, wie weiter unten noch beschrieben.

Das mindestens eine Reaktiv ist ausgewählt aus einer Gruppe umfassend Salpetersäure, Salzsäure, Schwefelsäure, Adipinsäure, Apfelsäure, Ascorbinsäure, Zitronensäure, Essigsäure, Oxalsäure, Weinsäure, Methylester, Ethylester und/oder Propylester der vorgenannten organischen Säuren und von sonstigen Dicarbonsäuren, Dicarbonsäureester mit Kohlenstoffketten mit 1 bis 6 Kohlenstoffatomen und Triglyceride. Die Dicarbonsäureester weisen zwei Organyl-Gruppen auf, die die genannten Kettenlängen der Kohlenstoffkette aufweisen, wobei aber auch die Länge der Kohlenstoffkette zwischen den beiden Estergruppen 1 bis 6 Kohlenstoffatome aufweisen kann. Je nach Funktionalisierung der genannten anorganischen und organischen Säuren, einschließlich derjenigen mit 1 bis 6 Kohlenstoffatomen zur Bildung von Dicarbonsäureestern, und Veresterungsgrad können Mono-, Di- oder Tripropyl-, -methyl- oder-ethylester vorliegen. Besonders bevorzugt als Ester sind Propylencarbonat, Triacetin (Glycerintriacetat) und/oder dibasische Ester (DBE), d.h. Dimethylester von Dicarbonsäuren. Besonders bevorzugt ist Propylencarbonat, insbesondere in einem zweistufigen Verfahren, wie weiter unten beschrieben. Besonders bevorzugt als organische Säure ist Essigsäure, insbesondere in Kombination mit mindestens einer anorganischen Säure, insbesondere verdünnter Schwefelsäure. Besonders bevorzugt ist das mindestens eine erste Reaktiv eine anorganische Säure, ausgewählt aus einer Gruppe umfassend Salpetersäure und Schwefelsäure. Eine solche mindestens eine anorganische Säure als Reaktiv wird vorzugsweise eingesetzt bei Herstellung einer wässrigen Zusammensetzung in einem einstufigen Verfahren, wie weiter unten beschrieben, oder aber zur Herstellung einer ersten Lösung mit einem spezifischen pH-Wert in einem zweistufigen Verfahren, wie weiter unten beschrieben. Im Vergleich hierzu etwas schwächere Säuren, wie insbesondere die vorstehend genannten Ester, kommen bevorzugt bei dem weiter unten beschrieben erfindungsgemäßen zweistufigen Verfahren in einer zweiten Lösung zum Einsatz. Besonders bevorzugt im einstufigen und zweistufigen Verfahren, insbesondere im zweistufigen Verfahren, sind mehrere Reaktive eingesetzt, bevorzugt mindestens einer der oben genannten Ester, mindestens eine anorganische Säure und/oder mindestens eine organische Säure, wobei die genannten bis zu drei Bestandteile nicht in Form einer einzigen gemeinsamen Mischung vorliegen beziehungsweise eingesetzt werden müssen, sondern auch getrennt in den beiden Stufen des zweistufigen, weiter unten beschriebenen Verfahrens eingesetzt werden können. So wird erfindungsgemäß in der ersten Stufe mindestens eine anorganische Säure und/oder mindestens eine organische Säure eingesetzt werden, bevorzugt verdünnt, und in der zweiten Stufe mindestens ein Ester, bevorzugt in Reinform, also unverdünnt. Weiter bevorzugt ist bei dem ein- oder zweistufigen Verfahren die anorganische Säure ausgewählt aus einer Gruppe umfassend ein-oder mehrprotonige, bevorzugt einprotonige, zweiprotonige und/oder dreiprotonige, Säuren, und ist besonders bevorzugt Schwefelsäure (zweiprotonig). Bevorzugt als einprotonige anorganische Säure ist Salzsäure. Weiter bevorzugt ist bei dem ein- oder zweistufigen Verfahren die organische Säure ausgewählt aus einer Gruppe umfassend Monocarbonsäuren, und ist bevorzugt Essigsäure. Weiter bevorzugt ist bei dem ein- oder zweistufigen Verfahren, bevorzugt zweistufigen Verfahren, der mindestens eine Ester ausgewählt aus einer Gruppe umfassend Propylencarbonat, Triacetin (Glycerintriacetat) und/oder dibasische Ester (DBE), d.h. Dimethylester von Dicarbonsäuren, und ist weiter bevorzugt Propylencarbonat. Besonders bevorzugt besteht eine Gruppe einsetzbarer Reaktive, insbesondere im zweistufigen Verfahren, aus Schwefelsäure, Essigsäure und/oder mindestens einem der vorgenannten Ester, bevorzugt Propylencarbonat. Als Reaktiv im Sinne der vorliegenden Erfindung sind Aldehyde und deren Derviate, insbesondere auch Glyoxal, ausgeschlossen, da diese in aller Regel schädlich für die Gesundheit und Grundwasser sind. Bevorzugt werden nur gesundheitsverträgliche Reaktive eingesetzt. Ganz besonders bevorzugt, insbesondere bei einer einstufigen Herstellung der wässrigen Zusammensetzung, ist das Reaktiv Schwefelsäure. Besonders bevorzugt sind die eingesetzten Säuren verdünnt eingesetzt, wobei als Löse- beziehungsweise Emulsionsmittel vorzugsweise Wasser dient. Besonders bevorzugt ist das mindestens eine Reaktiv ausgewählt aus einer Gruppe verdünnter anorganischer Säuren. Ganz besonders bevorzugt ist das mindestens eine Reaktiv verdünnte Schwefelsäure mit einem Schwefelsäuregehalt in einem Bereich von etwa 10 % bis etwa 50 %, weiter bevorzugt in einem Bereich von etwa 15 % bis etwa 30 %. Ganz besonders bevorzugt ist etwa 20 %-ige Schwefelsäure als Reaktiv. Besonders bevorzugt ist Schwefelsäure als Reaktiv, in einem zweistufigen Verfahren als erstes Reaktiv, eingesetzt. Die Menge an verdünntem anorganischem Reaktiv, insbesondere Schwefelsäure, liegt in einem Bereich von etwa 2 Gew.% bis etwa 10 Gew.%, bevorzugt in einem Bereich von etwa 3 Gew.% bis etwa 6 Gew.%, bezogen auf die gesamte Menge der Zusammensetzung, wobei das verdünnte anorganische Reaktiv etwa 15 % bis etwa 30% des unverdünnten anorganischen Reaktives umfasst. Die genannten Ester hingegen können bevorzugt in ihrer Reinform, dass heißt unverdünnt, und weiter bevorzugt in flüssiger Form, eingesetzt werden. Aber auch Mischungen aus den genannten Estern mit Wasser verdünnt sind möglich, soweit eine Mischbarkeit gegeben ist. Allerdings müsste dann gegebenenfalls die Konzentration des mindestens einen Wasserglases in der verdünnten Lösung hochgesetzt werden, was nachteilig für die Vernetzungsreaktion sein kann, so dass keine gleichmäßig ausgebildeten Weichgele erhältlich sein können. Organische Säuren werden bevorzugt wie anorganische Säuren verdünnt mit Wasser eingesetzt, weiter bevorzugt in Konzentrationsbereichen entsprechend den vorstehend für anorganische Säuren genannten.

Besonders bevorzugt liegt der pH-Wert der wässrigen Zusammensetzung in einem Bereich von etwa 7,5 bis etwa 10,5, bevorzugt bis etwa 10, weiter bevorzugt in einem Bereich von etwa 7,8 bis etwa 9,5. In den genannten Bereichen für den pH-Wert weist die erfindungsgemäße wässrige Zusammensetzung insbesondere noch ausreichende Kippzeiten, wie vorstehend wiedergegeben, auf, so dass diese gut verarbeitet werden kann, ohne dass eine zu schnelle Gelbildung der wässrigen Zusammensetzung einsetzt.

In einer weiter bevorzugten Ausführungsform der erfindungsgemäßen wässrigen Zusammensetzung weist diese einen Siliziumdioxid-Gehalt in einer Menge in einem Bereich von etwa 0,5 Gew.-% bis etwa 5 Gew.-%, bevorzugt in einem Bereich von etwa 0,9 Gew.-% bis etwa 3,2 Gew.-%, und weiter bevorzugt in einem Bereich von etwa 1,3 Gew.-% bis etwa 2,9 Gew.-%, bezogen jeweils auf die Gesamtmenge der Zusammensetzung, auf. Vorteilhafterweise ist bei den genannten erfindungsgemäßen und bevorzugten Bereichen betreffend den Siliziumdioxid-Anteil der wässrigen Zusammensetzung eine Verlängerung der Kippzeit möglich im Vergleich zu Siliziumdioxid-Gehalten, die außerhalb der beanspruchten Bereiche, insbesondere oberhalb der genannten Bereiche, liegen. Insbesondere bei Molmodulen in einem Bereich zwischen etwa 2,0 und etwa 3,0 der eingesetzten Wassergläser liegt der Siliziumdioxid-Gehalt bevorzugt in einem Bereich von etwa 1,3 Gew.-% bis etwa 2,9 Gew.-%, weiter bevorzugt bis etwa 2,6 Gew.-%. Besonders bevorzugt ist das mindestens eine Wasserglas in den bevorzugten, engen Bereichen wie vorstehend wiedergegeben mindestens ein Natriumwasserglas. Weiterhin kann eine wässrige Zusammensetzung und damit auch ein aus dieser hergestelltes Gel mit einem pH-Wert hergestellt werden, der unter 10 liegt, und bevorzugt in einem Bereich von etwa 7,8 bis etwa 9,5 liegt. Dabei kann in den gewählten Siliziumdioxid-Bereichen die Herstellung der wässrigen Lösung und des Gels auch relativ einfach und ohne große Verfahrenskomplikationen erfolgen. Darüber hinaus wird vorteilhafterweise bei einem Siliziumdioxid-Gehalt in den genannten Bereichen, bezogen auf die Gesamtmenge der Zusammensetzung, letztendlich nur eine geringe Menge an Alkalioxid eingesetzt, welches so gut wie vollständig im Gel gebunden ist und daher nicht durch Auswaschung ins Grundwasser in Form von Alkalikationen gelangen kann. Bei den genannten Siliziumdioxid-Gehalten erfolgt vorteilhafterweise die Bildung eines Gels mit einem feinen Netzwerk und kleinen Silikatpartikeln in diesem Netzwerk, wodurch das gebildete Gel als Weichgel eine bessere Langzeitstabilität und damit Lebensdauer aufweist als vergleichbare, aus Wasserglas hergestellte (Weich-)Gele mit Natriumaluminatlösung als Reaktiv.

Besonders bevorzugt im Sinne der vorliegenden Erfindung wird eine wässrige Zusammensetzung zur Bildung eines Gels eingesetzt, umfassend ein Natriumwasserglas mit einem Molmodul in einem Bereich von etwa 3,3 bis etwa 3,9 und als Reaktiv Schwefelsäure, insbesondere verdünnte Schwefelsäure, weiter bevorzugt 10 %-ige bis 30 %-ige Schwefelsäure, wobei die Zusammensetzung einen pH-Wert in einem Bereich von etwa 7,8 bis etwa 9,5 aufweist, wobei der Siliziumdioxid-Gehalt in einem Bereich von etwa 1,3 Gew.-% bis etwa 3 Gew.-%, bezogen auf die Gesamtmenge der Zusammensetzung, beträgt.

Besonders bevorzugt im Sinne der vorliegenden Erfindung wird eine wässrige Zusammensetzung zur Bildung eines Gels eingesetzt, umfassend mindestens ein, bevorzugt genau ein, Natriumwasserglas mit einem Molmodul in einem Bereich von etwa 3,3 bis etwa 3,9, bevorzugt in einer Menge in einem Bereich zwischen etwa 7,5 Gew.-% und etwa 10,5 Gew.-%, bezogen auf die Gesamtmenge der Zusammensetzung, und als erstes Reaktiv Schwefelsäure, insbesondere verdünnte Schwefelsäure, weiter bevorzugt 10 %-ige bis 30 %-ige Schwefelsäure, bevorzugt in einer Menge in einem Bereich von etwa 3,8 Gew.-% bis etwa 5,5 Gew.-%, bezogen auf die Gesamtmenge der Zusammensetzung, und als zweites Reaktiv mindestens einen Ester, bevorzugt Propylencarbonat, in einer Menge in einem Bereich von etwa 0,15 Gew.-% bis etwa 2 Gew.-%, bezogen auf die Gesamtmenge der Zusammensetzung, wobei die Zusammensetzung einen pH-Wert in einem Bereich von etwa 8 bis etwa 9,8 aufweist, wobei der Siliziumdioxid-Gehalt in einem Bereich von etwa 1,3 Gew.-% bis etwa 3 Gew.-%, bevorzugt in einem Bereich von etwa 2,3 Gew.-% bis etwa 2,8 Gew.-%, bezogen auf die Gesamtmenge der Zusammensetzung, beträgt. Dabei ist besonders bevorzugt, wenn als erstes Reaktiv die verdünnte Schwefelsäure in einem ersten Schritt einer verdünnten Wasserglaslösung zugegeben und in einem zweiten Schritt der mindestens eine Ester in Reinform, d.h. unverdünnt, der im ersten Schritt erzeugten Lösung zugegeben ist. Ansonsten umfasst die Zusammensetzung neben dem mindestens einen Natriumwasserglas, der Schwefelsäure und dem mindestens einen Ester bevorzugt nur Wasser.

In einer weiter bevorzugten erfindungsgemäßen wässrigen Zusammensetzung liegt ein Molverhältnis zwischen dem mindestens einen Reaktiv und einem Alkalioxid, welches von dem mindestens einen Wasserglas umfasst ist, in einem Bereich von etwa 0,5 : 1 bis etwa 2 : 1, weiter bevorzugt in einem Bereich von etwa 0,5 : 1 bis etwa 1,6 : 1. Das Molverhältnis bezieht sich auf die Neutralisierung der bei der Gelbildung verwendeten Komponenten, wobei die Lauge aus dem Alkalioxid gebildet wird, während die Säure aus dem Reaktiv stammt. Wird also ein Natriumwasserglas eingesetzt, bildet sich Natronlauge, wird Kaliumwasserglas eingesetzt, bildet sich Kalilauge. Damit ist das Molverhältnis abhängig von der Protonenzahl des eingesetzten Reaktives. Wird ein zweiprotoniges Reaktiv, insbesondere Schwefelsäure, eingesetzt, liegt das Molverhältnis bevorzugt in einem Bereich von etwa 0,7 : 1 bis etwa 0,98 : 1, weiter bevorzugt in einem Bereich von etwa 0,75 : 1 bis etwa 0,95 : 1. Vorteilhafterweise wird bei einer entsprechenden Einstellung des Molverhältnisses, also eines unterstöchiometrischen Molverhältnisses, einerseits die Bildung eines mehr oder weniger vollständig vernetzten Gels unterstützt, andererseits wird auch ein Gel erhalten, welches einen pH-Wert in den angegebenen erfindungsgemäßen und bevorzugten Bereichen aufweist. Dadurch wird letztendlich das Grundwasser geschützt, denn aufgrund der mehr oder weniger vollständigen Vernetzung wird ein Austritt von Alkalikationen und auch von Silikaten aus dem Gel verringert, wodurch eine Übersäuerung des Bodenmateriales oder aber des Grundwassers und eine negative Beeinflussung der Bodenfauna verringert werden kann.

Weiter bevorzugt umfasst die erfindungsgemäße Zusammensetzung mindestens ein Verdickungsmittel. Vorteilhafterweise kann durch die Zugabe mindestens eines Verdickungsmittels eine Einstellung der Viskosität der wässrigen Zusammensetzung erfolgen, welche einen Einfluss auf die Gelbildung und damit auch auf die Kippzeit aufweist. Besonders bevorzugt wird durch das mindestens eine Verdickungsmittel die Viskosität der erfindungsgemäßen wässrigen Lösung gerade zu Beginn der Reaktion zwischen dem mindestens einen Reaktiv und dem mindestens einen Wasserglas erhöht, und dadurch die Reaktionsgeschwindigkeit der Gelbildung herabgesetzt. Bevorzugt ist das mindestens eine Verdickungsmittel ausgewählt aus einer Gruppe umfassend Alginate, Pektine, Stärken, Xanthan, Kaolin, Bentonite, Celluloseester wie Carboxylmethylcellulose oder Hydroxethylcellulose, Polyacrylate, Tone der Zweischicht-und/oder Dreischichtmineralgruppe und/oder Polyurethane. Besonders bevorzugt ist das mindestens eine Verdickungsmittel in der wässrigen Lösung in einer Menge in einem Bereich von etwa 0,05 Gew.-% bis etwa 2,5 Gew.-%, bezogen auf die Gesamtmenge der Zusammensetzung, enthalten. Das oder die Verdickungsmittel reagieren nicht mit dem mindestens einen Wasserglas in der wässrigen Zusammensetzung, sondern beeinflussen deren Viskosität, indem diese erhöht wird. Die erfindungsgemäße wässrige Zusammensetzung kann auch anorganische Salze als Stabilisierungsmittel umfassen. Die anorganischen Salze sind bevorzugt ausgewählt aus einer Gruppe umfassend Sulfate, Carbonate, Hydrogencarbonate, Chloride, Phosphate, Nitrate und Oxide von Natrium, Kalium, Lithium, Magnesium und oder Kalzium. Besonders bevorzugt ist das mindestens eine Stabilisierungsmittel in der wässrigen Zusammensetzung in einer Menge in einem Bereich von etwa 0,01 Gew.-% bis etwa 1 Gew.-%, bezogen auf die Gesamtmenge der Zusammensetzung, enthalten. Zu Modifizierung des Molmoduls des mindestens einen Wasserglases in der wässrigen Lösung kann die erfindungsgemäße Zusammensetzung vorteilhafterweise auch Kieselsäure umfassen, bevorzugt in einer Menge in einem Bereich von etwa 0,01 Gew.-% bis etwa 2 Gew.-%, bezogen auf die Gesamtmenge der Zusammensetzung.

Die erfindungsgemäße wässrige Zusammensetzung umfasst vorzugsweise einen Gesamtgehalt an Wasser in einem Bereich von etwa 75 Gew.-% bis etwa 96 Gew.-%, weiter bevorzugt in einem Bereich von etwa 78 Gew.-% bis etwa 96 Gew.-%, bevorzugt etwa 80 Gew.-% bis etwa 96 Gew.-%, bezogen auf die Gesamtmenge der Zusammensetzung. Mit Wasser wird das mindestens eine Wasserglas, aber auch das Reaktiv, bevorzugt versetzt, so dass sich eine Lösung des mindestens einen Wasserglases beziehungsweise Reaktives in Wasser ergibt. Es kann deionisiertes Wasser oder Leitungswasser, Brunnenwasser und/oder Grundwasser eingesetzt werden, auch entsalztes Meerwasser ist einsetzbar.

Weiter bevorzugt umfasst die erfindungsgemäße Zusammensetzung mindestens ein Reaktiv als Reinsubstanz, insbesondere, wenn das Reaktiv ein bevorzugt nicht in fester Form vorliegender, bevorzugt mindestens ein flüssiger, unverdünnter Ester, wie diese weiter oben beschrieben sind, ist, in einer Menge in einem Bereich von etwa 0,15 Gew.-%, bevorzugt von etwa 0,25 Gew.-%, bis etwa 5 Gew.-%, bevorzugt bis etwa 2 Gew.-%, weiter bevorzugt bis etwa 1,5 Gew.-%, bezogen auf die Gesamtmenge der Zusammensetzung. "Als Reinsubstanz" bedeutet, dass ein Lösemittel wie Wasser nicht berücksichtigt ist, also die Menge des Reaktives ohne Lösemittel damit gemeint ist. So kann beispielsweise ein nicht mit Wasser verdünnter Ester als Reaktiv eingesetzt werden. Besonders bevorzugt ist das mindestens eine Reaktiv als Reinsubstanz in einer Menge in einem Bereich von etwa 0,5 Gew.-% bis etwa 4,5 Gew.-% und weiter bevorzugt in einem Bereich von etwa 0,8 Gew.-% bis etwa 4 Gew.-%, jeweils bezogen auf die Gesamtmenge der Zusammensetzung, von der Zusammensetzung umfasst. Soweit eine Mischung von Reaktiven, beispielsweise zwei, drei oder mehr Reaktive, in dem einstufigen oder zweistufigen Verfahren eingesetzt werden, gelten die vorstehend angegebenen Mengenbereiche für die Gesamtmenge einer solchen Zusammensetzung. Bevorzugt ist das mindestens eine Reaktiv in Reinform, bevorzugt mindestens einer der weiter oben genannten Ester, eingesetzt als zweites Reaktiv in einem zweistufigen Verfahren. Das mindestens eine Reaktiv in Reinform ist in einem zweistufigen Verfahren als zweites Reaktiv bevorzugt in einer Menge in einem Bereich von etwa 0,15 Gew.-% bis etwa 2 Gew.-%, weiter bevorzugt von etwa 0,25 Gew.-% bis etwa 1,5 Gew.-%, und weiter bevorzug von etwa 0,3 Gew.-% bis etwa 1,5 Gew.-%, jeweils bezogen auf die Gesamtmenge der Zusammensetzung, eingesetzt.

Weiter bevorzugt umfasst die erfindungsgemäße wässrige Zusammensetzung das mindestens eine Wasserglas mit einem Feststoffgehalt in einem Bereich von etwa 1 Gew.-% bis etwa 6 Gew.-%, bezogen auf die Gesamtmenge der Zusammensetzung. Besonders bevorzugt umfasst die wässrige Zusammensetzung einen Feststoffgehalt des mindestens einen Wasserglases in einem Bereich von etwa 1,2 Gew.-% bis etwa 5,8 Gew.-%, bezogen auf die Gesamtmenge der Zusammensetzung. Ganz besonders bevorzugt liegt der Feststoffgehalt des mindestens einen Wasserglases in einem Bereich von etwa 1,4 Gew.-%, bevorzugt von etwa 2,1 Gew-%, bis etwa 5,7 Gew.-%, bezogen auf die Gesamtmenge der Zusammensetzung. Soweit eine Mischung von Wassergläsern, beispielsweise aus zwei, drei oder mehr Wassergläsern vorliegt, gelten die vorstehend angegebenen Mengenbereiche für die Menge an Feststoffgehalt einer solchen Mischung. Der Feststoffgehalt wird bestimmt, indem ein (1) Gramm des mindestens einen Wasserglases in einem geeigneten, vorgeglühten und wieder erkalteten Tiegel bei einer Temperatur von etwa 650°C entwässert und geglüht wird über 60 Minuten, wobei die Temperatur langsam auf die Glühtemperatur von etwas 650°C gebracht wird. Dabei können Trägersubstanzen wie Sand eingesetzt werden, die ein Verspritzen des Wasserglases bei Erhitzung vermeiden. Aus dem durch einen Vergleich vor und nach Glühung durch Wägung ermittelten Glühverlust wird der Feststoffgehalt ermittelt, der dem Glührückstand entspricht. Der Feststoffgehalt besteht im Wesentlichen aus Siliziumdioxid und Natriumdioxid bei einem Natriumwasserglas und aus Siliziumdioxid und Kaliumoxid bei einem Kaliumwasserglas.

Mit der erfindungsgemäßen wässrigen Zusammensetzung ist es vorteilhafterweise möglich, ein Gel zu bilden, welches eine Abdichtung, beispielsweise in Form einer Dichtsohle, beispielsweise in einer Baugrube, ausbilden kann, wobei die wässrige Zusammensetzung bzw. das gebildete Gel umweltfreundlich und im Wesentlichen grundwasserneutral ausgebildet ist. Bei dem gebildeten Gel handelt es sich um ein Weichgel. Vorteilhafterweise werden durch die erzielte gute Vernetzbarkeit insbesondere keine Alkalikationen in das Grundwasser bzw. das umgebende Bodenmaterial abgegeben. Durch die einstellbaren, pH-Wert-abhängigen Kippzeiten werden die durch eine Übersäuerung bzw. zu hohe Alkalisierung auftretenden Nachteile vermieden. Es werden stark vernetzte Gele erhalten, wobei im Vergleich zu insbesondere aus dem Stand der Technik bekannten Gelen, die mittels Natriumaluminatlösung als Reaktiv hergestellt wurden, die Synärese erheblich geringer ausfällt, insbesondere bei der Herstellung der erfindungsgemäßen Zusammensetzung in einem zweistufigen Verfahren. Die hergestellten Gele scheiden mit der Zeit eine Synäreseflüssigkeit aus und schrumpfen dabei. Dies wird als Synärese im vorliegenden Zusammenhang bezeichnet. Aufgrund der nur geringen Synärese bei den aus der erfindungsgemäßen wässrigen Zusammensetzung hergestellten Gelen ist eine geringere Schrumpfung festzustellen. Die solchermaßen hergestellten Gele weisen eine bessere Langzeitstabilität auf, verglichen mit Gelen, die unter Einsatz von Natriumaluminatlösung als Reaktiv hergestellt wurden. Ganz besonders vorteilhafterweise lassen sich jedoch mit der erfindungsgemäßen Zusammensetzung sehr gut Kippzeiten vor der eigentlichen Gelbildung einstellen, insbesondere, wenn der Siliziumdioxid-Gehalt wie weiter oben beschrieben, berücksichtigt wird. Eine weiter genaue Einstellung der voraussichtlichen Kippzeit kann vorteilhafterweise durch die Einstellung des Molverhältnisses zwischen dem mindestens einen Reaktiv und dem mindestens einen Alkalioxid, wie vorstehend beschrieben, erzielt werden. Durch die sehr weitgehende Vernetzung wird vorteilhafterweise das Silikat aus dem mindestens einen Wasserglas nahezu quantitativ im Gel gebunden. Schließlich werden auch weniger Alkaliionen in das umgebende Bodenmaterial und das Grundwasser abgegeben.

Weiterhin betrifft die vorliegende Erfindung die Verwendung der erfindungsgemäßen wässrigen Zusammensetzung zur Bildung einer Abdichtung, beispielsweise in Form einer Dichtsohle einer Baugrube, mit einer Bodengrubenbasis unterhalb des Grundwasserspiegels, aber auch sonstiger Dichtsohlen oder teilweisen oder vollständigen Abkapselungen für Deponien etc., durch Injektion derselben in ein Bodenmaterial unter Bildung eines Gels, welches insbesondere ein Weichgel ist. Zum Beispiel können Deponien solchermaßen zum Grundwasser hin abgedichtet werden oder aber Altlasten/Schadstoffe im Boden allseitig verkapselt werden zur Verhinderung einer Verseuchung des Grundwassers. Bevorzugt erfolgt die Injektion der erfindungsgemäßen wässrigen Zusammensetzung in ein Bodenmaterial in einer Schicht, welche unterhalb einer Baugrubenbasis oder unterhalb einer Deponie oder Altlast, und dabei weiter bevorzugt beabstandet von dieser, liegt. Dann kann ein Aufschwimmen der Abdichtung in Form einer Dichtsohle, welche einen Verbund des Bodenmateriales mit dem aus der Mischung gebildeten Gel darstellt, im Anwendungsfall einer Baugrube sicher vermieden werden.

Des Weiteren betrifft die vorliegende Erfindung eine Abdichtung, hergestellt mit einer erfindungsgemäßen wässrigen Zusammensetzung, wie diese weiter oben beschrieben ist, durch Injektion derselben in Bodenmaterial, beispielsweise in Form einer Dichtsohle oder auch in Form einer Teil- oder Vollabkapselung einer Deponie, als auch eine erfindungsgemäße Baugrube mit einer Abdichtung in Form einer Dichtsohle, hergestellt mit einer erfindungsgemäßen wässrigen Zusammensetzung, wie vorstehend beschrieben, durch Injektion derselben in Bodenmaterial. Eine Baugrube umfasst insbesondere, wie auch in der DE 102 18 771 A1 ausgeführt, eine vertikale Sperre in Form einer Baugrubenumschließung. Bevorzugt ist die Dichtsohle, bevorzugt die Dichtsohle einer Baugrube, aber auch eine solche einer Deponie etc., derart hergestellt, dass diese den Eintritt oder Durchtritt von Grundwasser oder umgekehrt von Stoffen ins Grundwasser hinein verhindert. Eine Injektion der mindestens einen wässrigen Zusammensetzung erfolgt vorzugsweise durch eine Abdichtungsinjektion, und hier weiter bevorzugt durch ein Niederdruckverfahren.

Die vorliegende Erfindung betrifft weiterhin ein Verfahren zur Herstellung einer erfindungsgemäßen wässrigen Zusammensetzung, wie weiter oben beschrieben, wobei in einem ersten Schritt eine erste Mischung aus einer ersten Lösung aus Wasser mit mindestens einem Wasserglas und einer verdünnten zweiten Lösung mindestens eines ersten Reaktives, nämlich mindestens eine anorganische Säure und/oder eine organische Säure, vorgenommen wird, bis ein pH-Wert in einem Bereich von etwa 9,0 bis etwa 10,8 eingestellt ist, und in einem zweiten Schritt die erste Mischung mit mindestens einem zweiten Reaktiv, nämlich mindestens einem Ester, ausgewählt aus einer Gruppe umfassend Methylester, Ethylester und/oder Propylester der Ascorbinsäure, Essigsäure, und Dicarbonsäureester mit Kohlenstoffketten mit 1 bis 6 Kohlenstoffatomen, Triglyceride, Propylencarbonat, Triacetin oder dibasische Ester, in verdünnter Lösung oder in Reinform versetzt wird, bis ein pH-Wert in einem Bereich von etwa 7 bis etwa 10,5, bevorzugt bis etwa 10, weiter bevorzugt von etwa 7,8 bis etwa 9,5, erreicht wird. Dabei kann die verdünnte zweite Lösung mindestens eines ersten Reaktives vorgelegt werden und dann die erste Lösung aus mindestens einem Wasserglas und Wasser zugegeben werden. Alternativ kann auch die erste Lösung aus mindestens einem Wasserglas und Wasser vorgelegt und dann die verdünnte zweite Lösung mindestens eines ersten Reaktives zugegeben werden. Schließlich kann auch ohne eine Vorlage der ersten oder der zweiten Lösung diese unmittelbar vermischt werden. Wesentlich an dem erfindungsgemäßen Verfahren ist, dass sowohl die erste Lösung als auch die zweite Lösung eine verdünnte Lösung in Bezug auf die in diesen enthaltenen relevanten Verbindungen, nämlich das mindestens eine Wasserglas einerseits und das mindestens eine erste Reaktiv andererseits, darstellen. Von der verdünnten zweiten Lösung ist bevorzugt als erstes Reaktiv eine anorganische Säure, bevorzugt Schwefelsäure, umfasst. Als mindestens ein zweites Reaktiv in Reinform ist ein Ester, wie oben beschrieben, bevorzugt einer der oben genannten Ester, weiter bevorzugt Propylencarbonat, Triacetin und/oder dibasische Ester (DBE),einsetzbar. Weiter bevorzugt ist bei einer solchen verdünnten zweiten Lösung als erstes Reaktiv Schwefelsäure, insbesondere verdünnte Schwefelsäure, weiter bevorzugt 10 %-ige bis 30 %-ige Schwefelsäure, bevorzugt in einer Menge in einem Bereich von etwa 2 Gew.% bis etwa 10 Gew.%, besonders bevorzugt in einem Bereich von etwa 3,8 Gew.-% bis etwa 5,5 Gew.-%, bezogen auf die Gesamtmenge der Zusammensetzung, eingesetzt. Würde insbesondere keine verdünnte zweite Lösung, insbesondere umfassend mindestens eine organische Säure, und/oder mindestens eine anorganische Säure, sondern beispielsweise das Reaktiv in Form einer konzentrierten anorganischen Säure, beispielsweise in Form von konzentrierter Schwefelsäure, eingesetzt werden, würde die Gelbildung unkontrolliert ablaufen, da die Reaktionsgeschwindigkeit der Gelbildung dann sehr hoch ist. Eine Verdünnung des mindestens einen ersten Reaktives erfolgt vorzugsweise mit Wasser als Lösemittel. Lösung im vorstehenden Sinne heißt auch, dass das mindestens eine erste Reaktiv in Form einer Emulsion oder Suspension in Wasser vorliegen kann. Die Mischung kann auch derart erfolgen, dass die Verdünnung gemeinsam erfolgt durch Vorlage der einzelnen Bestandteile, nämlich zumindest von Wasser, das bevorzugt zuerst vorgelegt wird, mindestens einem Wasserglas und mindestens einem Reaktiv. Bei dieser Ausgestaltung der Erfindung ist darauf zu achten, dass eine ausreichend schnelle Durchmischung der genannten Bestandteile erfolgt. Bevorzugt werden aber zunächst die erste und die zweite Lösung separat hergestellt und dann erst vermischt. Weitere Bestandteile, wie zum Beispiel das mindestens eine Verdickungsmittel, Stabilisationsmittel oder Kieselsäure, können bei Mischung der voneinander getrennt hergestellten verdünnten ersten und verdünnten zweiten Lösung zumindest einer von diesen, gegebenenfalls auch beiden Lösungen, oder auch erst oder zusätzlich in der Mischvorrichtung den sich mischenden ersten und zweiten Lösungen zugesetzt werden. Bevorzugt erfolgt eine Zugabe von dem mindestens einen Verdickungsmittel zu Wasser vor der Zugabe des mindestens einen Wasserglases zur Herstellung der ersten Lösung oder vor der Zugabe des mindestens einen Reaktives zur Herstellung der zweiten Lösung.

Besonders bevorzugt wird bei dem erfindungsgemäßen Verfahren das Verhältnis der Menge des Feststoffgehaltes von Wasserglas zu Wasser in der ersten Lösung in einem Bereich von etwa 1 : 5 bis etwa 1 : 50, bevorzugt in einem Bereich von etwa 1 : 10 bis etwa 1 : 30, gewählt. Durch die entsprechende Wahl des Mengenverhältnisses, die in Richtung stärker verdünnter erster Lösungen von Wasserglas zu Wasser verschoben ist, wird vorteilhafterweise bei Reaktionen mit der verdünnten zweiten Lösung bzw. des in dieser enthaltenen mindestens einen ersten Reaktives eine möglichst vollständige Vernetzung des eingesetzten Wasserglases erhalten, wodurch insbesondere langlebige Gele aus der wässrigen Zusammensetzung gebildet werden können. Bei einem alternativen Verfahren wie vorstehend beschrieben, bei dem Wasser, das mindestens eine Wasserglas und das mindestens eine erste Reaktiv ausreichend schnell mit einer geeigneten Mischvorrichtung gemischt werden, kann ebenfalls eine möglichst vollständig Vernetzung des eingesetzten Wasserglases bzw. der eingesetzten Wassergläser erhalten werden.

Weiter bevorzugt ist das Verhältnis der Menge an einem zweiten Reaktiv als Reinsubstanz, also lösemittelfrei, insbesondere wasserfrei, zu Wasser in der zweiten Lösung in einem Bereich von etwa 1 : 1 bis etwa 1 : 125, weiter bevorzugt in einem Bereich von etwa 1 : 10 bis etwa 1 : 110, gewählt. Bei den genannten Mengenverhältnissen von Reaktiv zu Wasser wird letztendlich eine Übersäuerung der wässrigen Zusammensetzung als auch eine Gelbildung in pH-Wertbereichen nahe 7 vermieden.

Weiter bevorzugt wird die aus der ersten Lösung und zweiten Lösung erhaltene Mischung in einem Durchflussmischer erzeugt und nachfolgend die Mischung zur Injektion in ein Bodenmaterial ausgegeben. Es kann aber auch in Form eines Batches gearbeitet werden. Dabei werden die einzelnen Bestandteile der Zusammensetzung getrennt einer Mischvorrichtung zugeführt und gemeinsam vermischt. Eine Vorverdünnung des mindestens einen Wasserglases und des mindestens einen ersten Reaktives ist dabei vorteilhaft. Ester als zweites Reaktiv werden bevorzugt in Reinform, also unverdünnt, eingesetzt. Die Injektion in ein Bodenmaterial kann dabei wie vorstehend bereits im Zusammenhang mit der erfindungsgemäßen wässrigen Zusammensetzung als auch der Dichtsohle bzw. Baugrube beschrieben erfolgen. Die vorteilhafte Mischung in einem Durchflussmischer ermöglicht insbesondere ein kontinuierliches Austragen der Mischung durch Injektion in ein Bodenmaterial. Die Kontinuität der Austragung ist auch deswegen möglich, weil eine spezifische wässrige Zusammensetzung eingesetzt wird, die aufgrund der Auswahl mindestens eines spezifischen Wasserglases und mindestens eines spezifischen Reaktives die Einstellung der erfindungsgemäßen pH-Wertbereiche in einem kontinuierlichen Verfahren ermöglicht.

Erfindungsgemäß wird in einem ersten Schritt eine erste Mischung aus der ersten Lösung des Wassers mit dem mindestens einen Wasserglas und der verdünnten zweiten Lösung mindestens eines ersten Reaktives vorgenommen, bis ein pH-Wert in einem Bereich von etwa 9 bis etwa 10,8, bevorzugt von etwa 9 bis etwa 10, eingestellt ist, und in einem zweiten Schritt wird dann diese erste Mischung mit mindestens einem zweiten Reaktiv in verdünnter Lösung oder mit mindestens einem zweiten Reaktiv in Reinform, wenn als zweites Reaktiv mindestens ein Ester, bevorzugt einer der vorstehend definierten Ester, eingesetzt wird, versetzt, bis ein pH-Wert in einem Bereich von etwa 7 bis etwa 10,5, bevorzugt bis etwa 10, weiter bevorzugt in einem Bereich von etwa 7,8, weiter bevorzugt von etwa 8,5, bis etwa 9,8, weiter bevorzugt bis etwa 9,5, eingestellt ist. Diese erfindungsgemäße Ausführungsform des erfindungsgemäßen Verfahrens kann im Sinne der vorliegenden Erfindung als zweistufiges Verfahren angesprochen werden. Anstatt einer verdünnten zweiten Lösung kann bei Einsatz von Estern als insbesondere zweites Reaktiv, die bevorzugt in Reinform, als Feststoff oder flüssig, vorliegen, dieser unmittelbar ohne Verdünnung eingesetzt werden. Im ersten Schritt wird mit dem mindestens einen ersten Reaktiv bevorzugt eine Vorneutralisierung des mindestens einen Wasserglases auf einen Neutralisierungsgrad in einem Bereich von etwa 70% bis etwa 85%, bevorzugt in einem Bereich von etwa 72% bis etwa 80%, vorgenommen. Im zweiten Schritt erfolgt dann über das mindestens eine zweite Reaktiv, bevorzugt mindestens ein Ester in Reinform, eine weitergehende Neutralisierung auf einen Neutralisierungsgrad in einem Bereich von etwa 90% bis etwa 160%, weiter bevorzugt auf einen Bereich von etwa 100% bis etwa 130%. Das zweistufige Verfahren zeichnet sich durch den Vorteil aus, dass die erste Mischung mit einem pH-Wert in einem Bereich von etwa 9 bis etwa 10,8 über eine für die Verwendung ausreichend lange Zeit gelagert werden kann, möglicherweise auch über mehrere Tage. Der zweite Schritt erfolgt bevorzugt etwa 5 Sekunden, weiter bevorzugt etwa 30 Sekunden, noch weiter bevorzugt etwa 30 Minuten, bis etwa 48 Stunden, bevorzugt bis etwa 2 Stunden, noch weiter bevorzugt bis etwa 5 Minuten, nach dem ersten Schritt, weiter bevorzugt in einem Zeitraum von etwa 30 Minuten bis etwa 6 Stunden, bevorzugt von etwa 30 Minuten bis etwa 90 Minuten, nach dem ersten Schritt des erfindungsgemäßen Verfahrens. Es kann so die Kippzeit einfacher eingestellt werden, indem die erste Mischung im zweiten Schritt mit mindestens einem zweiten Reaktiv in verdünnter Lösung oder mit mindestens einem Ester in Reinform, also unverdünnt, insbesondere mit mindestens einem der vorstehend definierten Ester, versetzt wird. Der zweite Schritt kann sich auch bei einer kontinuierlichen Verfahrensführung im Wesentlichen unmittelbar an den ersten Schritt anschließen. Die bei einem einstufigen Verfahren möglicherweise entstehenden Probleme mit einer zu schnell einsetzenden Gelbildung, die auch von Umgebungstemperaturen und den eingesetzten Materialien abhängig ist, werden hierdurch verringert. Die Einstellung der Kippzeit erfolgt im Wesentlichen durch die Zugabe des mindestens einen zweiten Reaktives, sei es in verdünnter Lösung oder als Feststoff beziehungsweise in Reinform, auch flüssig, im Fall von Estern als zweites Reaktiv. Erfindungsgemäß sind das mindestens eine zweite Reaktiv und das mindestens eine erste Reaktiv voneinander verschieden. Beispielsweise kann als mindestens ein erstes Reaktiv eine anorganische Säure, beispielsweise und auch bevorzugt Schwefelsäure in verdünnter Form, eingesetzt werden, und dann nach Erreichen des pH-Werts in einem Bereich von etwa 9 bis etwa 10,8 und nach gegebenenfalls Lagerung der ersten Lösung als mindestens ein zweites Reaktiv ein Methylester, Ethylester oder Propylester einer organischen Säure, wie beispielsweise Propylencarbonat oder Triacetin oder DBE, eingesetzt werden, um den pH-Wert in einem Bereich von etwa 7 bis etwa 10,5, bevorzugt bis etwa 10, einzustellen. Je niedriger der pH-Wert eingestellt wird, umso kürzer ist in aller Regel die Kippzeit.

Die Vorteile der vorliegenden Erfindung werden anhand der nachfolgenden Figuren und Beispiele näher erläutert. Es zeigen:
- Fig. 1:: eine graphische Auswertung zur Bestimmung der Kippzeit aus der komplexen Viskosität mit dem in der vorliegenden Erfindung verwendeten Verfahren zur Bestimmung der Kippzeit;
- Fig. 2a:: Bestimmung der Kippzeit in Abhängigkeit von dem pH-Wert eines Natriumwasserglases mit einem Molmodul von 3,46;
- Fig. 2b:: Bestimmung der Kippzeit in Abhängigkeit von dem pH-Wert eines Natriumwasserglases mit einem Molmodul von 3,83;
- Fig. 2c:: Bestimmung der Kippzeit in Abhängigkeit von dem pH-Wert eines Kaliumwasserglases mit einem Molmodul von 3,48;
- Fig. 2d:: Bestimmung der Kippzeit in Abhängigkeit von dem pH-Wert eines Kaliumsilikats mit einem Molmodul von 3,97;
- Fig. 3a:: Vergleich der Kippzeiten von Natriumwassergläsern und Kaliumwassergläsern bei einem Siliziumdioxid-Gehalt von 1,5 Gew.-%, bezogen auf die Gesamtmenge der Zusammensetzung;
- Fig. 3b:: Vergleich der Kippzeiten von Natriumwassergläsern und Kaliumwassergläsern bei einem Siliziumdioxid-Gehalt von 2 Gew.-%, bezogen auf die Gesamtmenge der Zusammensetzung;
- Fig. 3c:: Vergleich der Kippzeiten von Natriumwassergläsern und Kaliumwassergläsern bei einem Siliziumdioxid-Gehalt von 2,5 Gew.-%, bezogen auf die Gesamtmenge der Zusammensetzung;
- Fig. 4a:: Vergleich von Kippzeiten bei einer im zweistufigen Verfahren hergestellten Zusammensetzung aus einem Natriumwasserglas bei einem Siliziumdioxid-Gehalt von 2,5 Gew.-% mit drei unterschiedlichen Estern im zweiten Schritt als zweites Reaktiv in Abhängigkeit vom Neutralisierungsgrad im zweiten Schritt; und
- Fig. 4b:: Vergleich von Kippzeiten gemäß Fig. 4a bei nur einem Ester als zweites Reaktiv bei einem Natriumwasserglas mit unterschiedlichen Siliziumdioxid-Gehalten.

Die in der vorliegenden Erfindung angewandte Methode zur Bestimmung der Kippzeit wurde bereits vorstehend in der allgemeinen Beschreibung eingehend erläutert. Fig. 1 zeigt hierzu eine beispielhafte graphische Darstellung einer viskosimetrischen Kippzeitbestimmung mit einem Oszillationsrheometer Haake Viskotester IQ und die graphische Ermittlung der Kippzeit anhand des eingesetzten Algorithmus, wie ebenfalls bereits eingehend in der allgemeinen Beschreibung oben beschrieben. Der beispielhaften Auswertegraphik gemäß Fig. 1 kann dabei entnommen werden, dass durch Messwertrauschen bei der Messung zwei Kippzeiten (siehe die dort wiedergegebene Rechteckkurve) ermittelt wurden, nämlich bei etwa 500 Sekunden und einmal bei etwa 820 Sekunden. Die sich hieraus ergebende Kippzeit liegt bei 500 Sekunden, da stets bei Ermittlung mehrerer Kippzeiten aufgrund von Vorzeichenwechseln, erzeugt durch den dargelegten Algorithmus, diejenige Kippzeit, welche sich an dem Punkt befindet, an dem der Betrag der ermittelten komplexen Viskosität beginnt geringer zu werden, diejenige Kippzeit ist, die relevant ist für den Einsatz der erfindungsgemäßen wässrigen Zusammensetzung im Rahmen der Erstellung von Abdichtungen wie Dichtsohlen und Baugruben mit Dichtsohlen, insbesondere durch Injektion, unter Bildung eines Gels, insbesondere eines Weichgels.

Die Fig. 2a bis 2d zeigen die Ermittlungen der Kippzeiten in Abhängigkeit von dem pH-Wert in Bezug auf unterschiedliche Natriumwassergläser bzw. Kaliumwassergläser, wobei als Reaktiv stets 20 %-ige Schwefelsäure eingesetzt wurde. Sämtliche eingesetzten Natriumwassergläser und Kaliumwassergläser wurden von der Wöllner GmbH, Ludwigshafen, bezogen. Die nachfolgende Tabelle 1 verdeutlicht die Eigenschaften der eingesetzten Wassergläser:

**Tabelle 1**

| Wasserglas-Typ | Molmodul [-] |
|---|---|
| Natriumsilikat A | 3,46 |
| Natriumsilikat B | 3,83 |
| Kaliumsilikat A | 3,48 |
| Kaliumsilikat B | 3,97 |
| Natriumsilikat C | 2,11 |
| Kaliumsilikat C | 2,54 |

Bei den zugrundeliegenden Versuchen wurde der Siliziumdioxid-Gehalt in einem Bereich von 1,5 Gew.-% bis 4 Gew.-% Siliziumdioxid, jeweils bezogen auf die Gesamtmenge der eingesetzten wässrigen Zusammensetzung, variiert. Das Molverhältnis der als Reaktiv eingesetzten 20 %-igen Schwefelsäure zum Natriumoxid-Anteil bzw. Kaliumoxid-Anteil wurde dabei in Schritten von 1,1 : 1, 1,05 : 1, 1 : 1, 0,9 : 1, 0,85 : 1 und 0,8 : 1 abgestuft. Um unerwünschte Reaktionen beim Mischen von Säure und Wasserglas zu verhindern, wurde sowohl die Schwefelsäure als auch das eingesetzte Natriumwasserglas oder Kaliumwasserglas mit jeweils der Hälfte des benötigten Anmachwassers vorverdünnt. Bei der Versuchsdurchführung wurde die verdünnte Schwefelsäure vorgelegt und die verdünnte Wasserglaslösung unter starkem Rühren zugegeben. Bei denjenigen Versuchen, bei denen innerhalb von 48 Stunden keine Gelbildung beobachtet werden konnte, wurde eine Kippzeit von 10.000 Minuten angenommen. Bei Versuchen, bei denen eine Gelbildung in einer Zeitspanne zwischen 3 Stunden und 24 Stunden eintrat, wurde aufgrund begrenzter Kapazitäten eine Kippzeit von 24 Stunden angenommen.

Aus den vorstehenden Molverhältnissen und Siliziumdioxid-Anteilen ergaben sich die Zusammensetzungen der eingesetzten erfindungsgemäßen wässrigen Zusammensetzungen von selbst. Beispielsweise setzt sich eine wässrige Zusammensetzung mit einem Molverhältnis von Schwefelsäure zu Natriumoxid von 0,9 : 1 bei Einsatz des Natriumsilikates A bei einem Siliziumdioxid-Gehalt von 1,5 Gew.-%, bezogen auf die Gesamtmenge der Zusammensetzung, zusammen aus 5,41 Gew.-% Natriumsilikat A als Natrium-Wasserglas, 3,27 Gew.-% 20 %-ige Schwefelsäure und 91,32 Gew.-% Wasser, wohingegen bei Zugrundelegung eines Siliziumdioxid-Gehaltes von 3 Gew.-%, bezogen auf die Gesamtmenge der Zusammensetzung, 10,81 Gew.-% Natriumsilikat A als Natrium-Wasserglas, 6,54 Gew.-% 20 %-ige Schwefelsäure und 82,65 Gew.-% Wasser bestand. Bei einem Molverhältnis von Schwefelsäure zu Natriumoxid von 0,8 : 1 bei Einsatz von Natriumsilikat A als Natrium-Wasserglas ergab sich beispielsweise eine Zusammensetzung bei Zugrundelegung eines Siliziumdioxid-Gehaltes von 1,5 Gew.-%, bezogen auf die Gesamtmenge der Zusammensetzung, mit 5,41 Gew.-% Natriumsilikat A als Natrium-Wasserglas, 2,95 Gew.-% 20 %-ige Schwefelsäure und 91,64 Gew.-% Wasser, während bei Zugrundelegung eines Siliziumdioxid-Gehaltes von 3 Gew.-% 10,81 Gew.-% Natriumsilikat A als Natrium-Wasserglas, 5,9 Gew.-% 20 %-ige Schwefelsäure und 83,29 Gew.-% Wasser in der Zusammensetzung vorhanden waren. Sämtliche genannten Mengenangaben in Gewichtsprozent beziehen sich jeweils auf die Gesamtmenge der wässrigen Zusammensetzung.

Der pH-Wert wurde bei den durchgeführten Versuchen unmittelbar nach dem Ansetzen der vollständigen Mischung gemessen, da nachfolgend in aller Regel ein Anstieg des pH-Wertes um bis zu 0,5 beobachtet werden konnte. Dies sollte keinen Einfluss auf die Durchführung der Versuche haben, weshalb die pH-Wert-Messung unmittelbar nach dem Ansetzen der wässrigen Mischungen erfolgte. Im Übrigen wurden die Messungen mehr oder weniger bei Raumtemperatur in einem Temperaturbereich von 23°C bis 30°C durchgeführt. Dabei ist zu beachten, dass die Temperatur einen Einfluss auf die Gelbildung und damit die Kippzeiten hat in dem Sinne, dass, je niedriger die Temperatur liegt, umso länger die Gelbildung andauert und damit umso höher die Kippzeiten sind. Fig. 2a betreffend den Einsatz eines Natrium-Wasserglases Natriumsilikat A können Kippzeiten bei einem pH-Wert von 8 zwischen knapp einer Minute und etwa 80 Minuten entnommen werden, wobei ein pH-Wert umso geringer ist, je höher der Siliziumdioxid-Gehalt ist. Die in Fig. 2a wiedergegebene Kurve betreffend 3 Gew.-% Siliziumdioxid-Gehalt weist eine Unregelmäßigkeit auf, die auf einen Messfehler zurückzuführen ist.

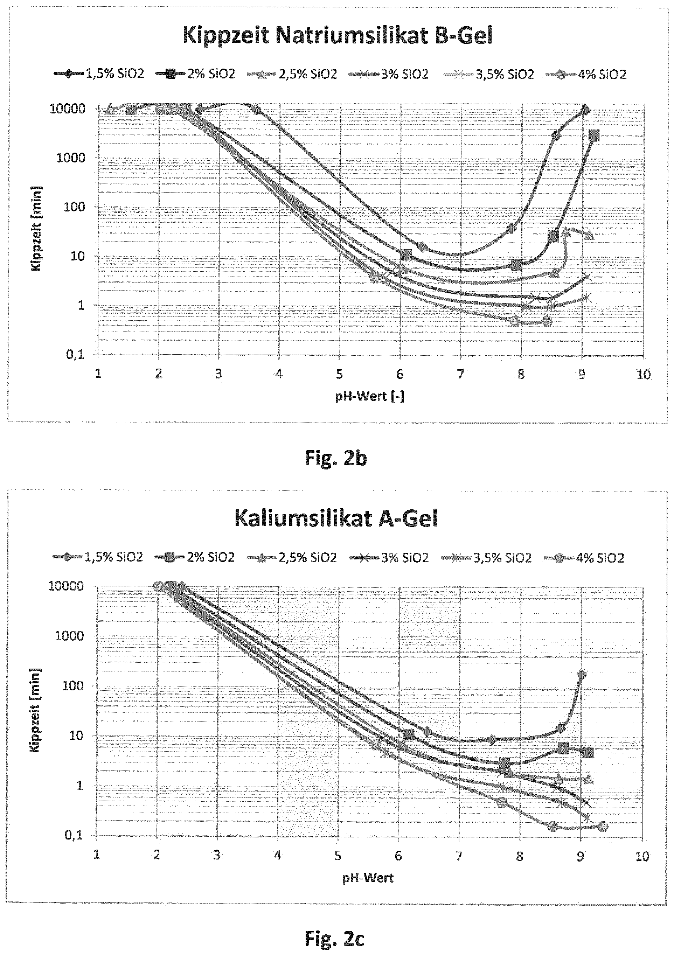

Fig. 2b zeigt nun die Ermittlung der Kippzeit in Abhängigkeit vom pH-Wert bei Einsatz des Natrium-Wasserglases Natriumsilikat B, welches ein höheres Molmodul aufweist als das Natriumsilikat A gemäß Fig. 2a. Hier sind im Wesentlichen jedoch die Zusammenhänge zwischen dem Siliziumdioxid-Gehalt, pH-Wert und Kippzeit ähnlich wie bei dem Natriumwasserglas Natriumsilikat A. Bei einem Siliziumdioxid-Gehalt von 2,5 Gew.-% ist eine Abweichung zu erkennen, die ebenfalls auf einem Messfehler beruht.

Fig. 2c zeigt die Abhängigkeit der Kippzeit vom pH-Wert bei Einsatz eines Kalium-Wasserglases Kaliumsilikat A mit einem Molmodul von 3,48, welches insoweit vergleichbar mit dem Einsatz eines Natrium-Wasserglases Natriumsilikat A gemäß Fig. 2a ist. Hier sind bei einem pH-Wert von 8 geringere Kippzeiten im Vergleich zu dem Natrium-Wasserglas gemäß Fig. 2a festzustellen, die teilweise im unteren akzeptablen Verarbeitungsbereich liegen. Im Übrigen steigt hier ebenfalls mit abnehmendem Siliziumdioxidanteil die Kippzeit an.

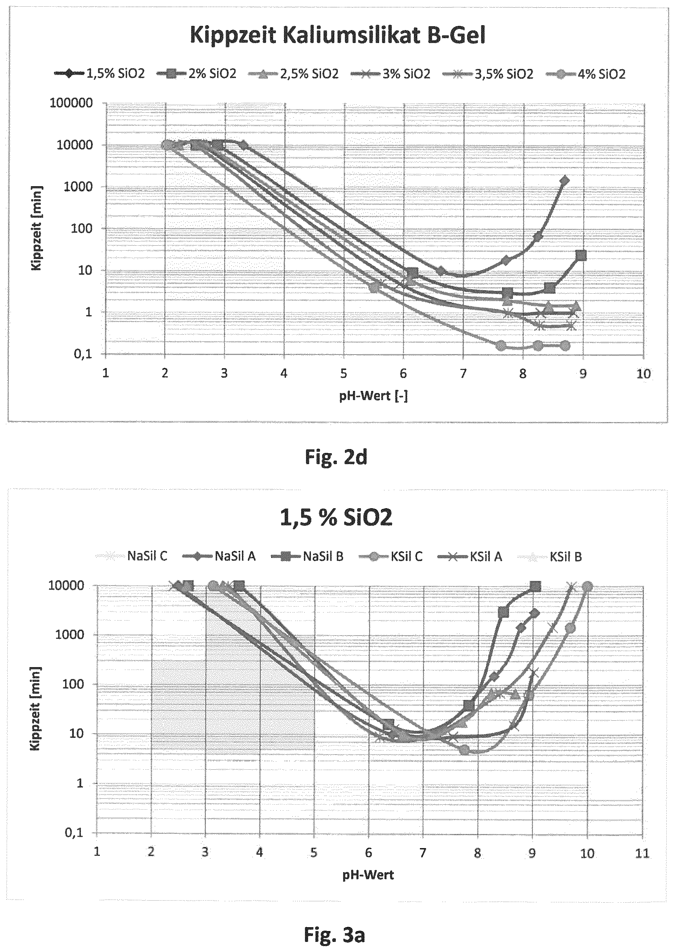

Fig. 2d zeigt die Abhängigkeit der Kippzeit vom pH-Wert bei Einsatz eines Kalium-Wasserglases Kaliumsilikat B mit einem hohen Molmodul von 3,97, welches in etwa mit dem Natrium-Wasserglas Natriumsilikat B gemäß Fig. 2b verglichen werden kann. Auch hier zeigt sich eine Verringerung der Kippzeit und im Übrigen ähnliche Ergebnisse, wie diese mit dem niedermoduligeren Kalium-Wasserglas Kaliumsilikat A erzielt wurden.

Zusammenfassend lässt sich den Fig. 2a bis 2d entnehmen, dass vorzugsweise bei Einstellung eines pH-Wertes unter 10,5 oder 10 der Siliziumdioxid-Anteil in einem Bereich unter etwa 3,5 Gew.-%, bevorzugt unter 3 Gew.-%, abgesenkt werden sollte. Da sich zudem bei Einsatz höherer Siliziumdioxid-Gehalte eine stärkere Synärese, also ein verstärktes Schrumpfungsverhalten durch Ausschwitzen des im Gelgerüst gefangenen Porenwassers, zeigte, sind die vorstehend genannten Siliziumdioxid-Gehalte solche, die im bevorzugten Bereich der vorliegenden Erfindung liegen.

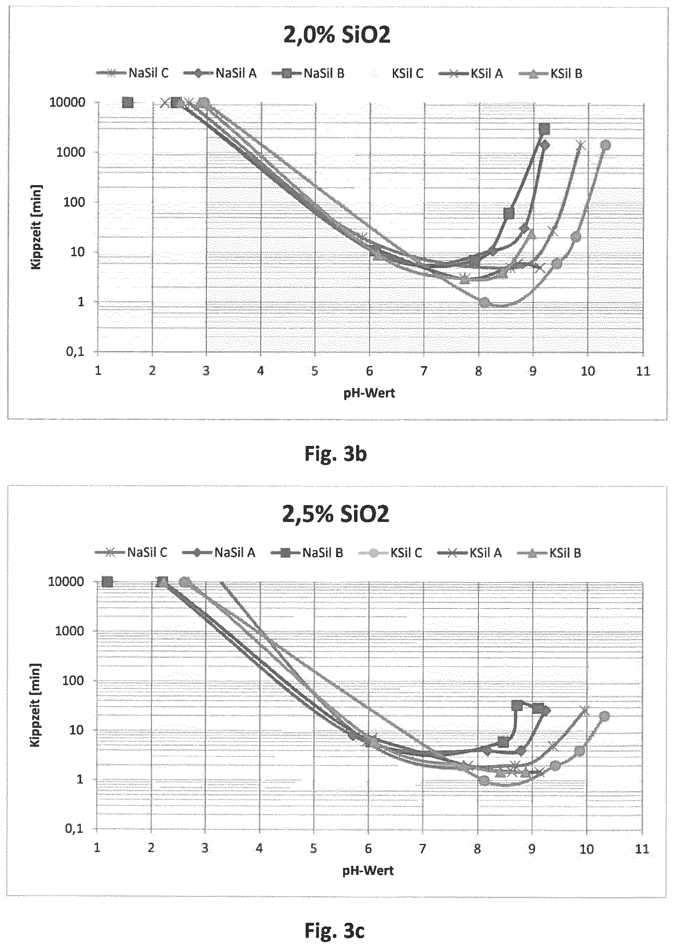

Die eingesetzten insgesamt sechs Natrium-Wassergläser und Kalium-Wassergläser wurden bei Siliziumdioxid-Gehalten von 1,5 Gew.-%, 2 Gew.-% und 2,5 Gew.-% bei unterschiedlichen pH-Werten miteinander verglichen. Fig. 3a bis 3c verdeutlichen die Unterschiede, wobei die Natriumsilikate mit "NaSil" und die Kaliumsilikate mit "KSil" abgekürzt sind. Bei einem Siliziumdioxid-Gehalt von 1,5 Gew.-% ist mit Ausnahme von dem Kalium-Wasserglas C bei einem pH-Wert im Bereich von 8 eine minimale Kippzeit von 10 Minuten gewährleistet. Oberhalb eines pH-Wertes von 7 liegen die Kippzeiten von Kalium-Wassergläsern zum Teil deutlich unterhalb der Kippzeiten von Natrium-Wassergläsern. In einem pH-Bereich zwischen 8 und 9 ist auffällig, dass höhermodulige Wassergläser eine höhere Kippzeit aufweisen. Ein Vergleich der Fig. 3a betreffend einen Siliziumdioxid-Gehalt von 1,5 Gew.-% mit der Fig. 3b betreffend einen Siliziumdioxid-Gehalt von 2 Gew.-% zeigt ein ähnliches Verhalten, wobei als relevanter Unterschied eine Verschiebung in den alkalischen Bereich betreffend das Minimum der Kippzeiten zu erkennen ist. Ein entsprechendes Verhalten ist gemäß Fig. 3c bei Siliziumdioxid-Gehalten von 2,5 Gew.-% zu beobachten betreffend Natrium-Wassergläser. Bei Kalium-Wassergläsern ist kaum mehr ein Unterschied zwischen hochmoduligem und niedermoduligem Kalium-Wasserglas zu erkennen. Bei Natrium-Wassergläsern erfolgt keine weitere Verschiebung des Kippzeitminimums in den alkalischen Bereich, bei Kalium-Wassergläsern ist eine Verschiebung hingegen zu erkennen.

Die in den Fig. 2a bis 2d und 3a bis 3c wiedergegebenen Versuchsreihen zeigen, dass eine optimale erfindungsgemäße wässrige Zusammensetzung zur Herstellung eines Gels, insbesondere eines Weichgels, welches als Abdichtung, beispielsweise für Dichtsohlen oder Baugruben mit Dichtsohlen eingesetzt werden kann, einen Siliziumdioxid-Gehalt in einem Bereich von etwa 1,5 Gew.-% bis etwa 3 Gew.-% aufweisen bei einem Molverhältnis der eingesetzten Schwefelsäure als Reaktiv zum Alkalioxidgehalt in einem Bereich von etwa 0,75 : 1 bis etwa 0,95 : 1. Insbesondere dann werden grundwasserakzeptable und umweltfreundliche pH-Werte in einem Bereich von etwa 7 bis etwa 9,5 für die wässrige erfindungsgemäße Zusammensetzung erhalten.

Weiterhin wurden Vergleichsversuche verschiedener Reaktivesysteme in Hinblick auf ihre Umweltverträglichkeit durchgeführt. Dabei wurde ein Vergleich vorgenommen zwischen einem auf einer Natriumaluminatlösung basierenden Reaktiv, einem auf dem Metallsalz Natriumhydrogencarbonat basierendem Reaktiv in Pulverform und Schwefelsäure als Reaktiv. Die untersuchten Zusammensetzungen sind der nachfolgenden Tabelle 2 zu entnehmen:

**Tabelle 2**

| Reaktiv | Reaktivanteil [Gew.-%] | Wasserglas-Typ | SiO₂-Anteil [Gew.-%] | Wasseranteil [Gew.-%] |
|---|---|---|---|---|
| Stabisil 19 | 2,75 | Natriumsilikat A | 6,35 | 74,25 |
| Stabisil 23 | 2,00 | Natriumsilikat A | 6,35 | 75,00 |
| Schwefelsäure (20 %-ig) | 4,65 | Natriumsilikat B | 2,50 | 85,82 |

Jeweils 100 g der vorstehend genannten Mischungen mit einem Molverhältnis von Reaktiv zu Alkalioxid von 0,875:1 wurden entsprechend den durchgeführten Versuchen, die den Fig. 2a bis 2d und 3a bis 3c zugrunde lagen, durchgeführt. Die Probegefäße wurden anschließend fest verschlossen und eine Woche bei Raumtemperatur von 20°C stehen gelassen. Anschließend wurde die entstandene Synärese-Flüssigkeit ausgewogen und analysiert.

Schon eine optische Analyse der Gele, hergestellt mit den beiden Vergleichsmischungen mit Stabisil 19 (bezogen von Wöllner GmbH, Ludwigshafen), welches eine Natriumaluminatlauge mit 19 Gew.-% Aluminiumoxid darstellt, und mit Stabisil 23 (bezogen von Wöllner GmbH, Ludwigshafen), welches ein pulverförmiges Natriumhydrogencarbonat ist, zeigt deutliche Unterschiede zu dem mit einer wässrigen Zusammensetzung von Natrium-Wasserglas B unter Einsatz von Schwefelsäure bei einem Siliziumdioxid-Gehalt von 2,5 Gew.-% und einem pH-Wert von etwa 8,5 hergestellten Gel insofern, als dass letzteres erheblich heller und klarer erschien. Daraus kann geschlossen werden, dass ein feineres Netzwerk vorliegt und Silikatpartikel im Gel selbst kleiner vorliegen. Die Analyse der Synärese-Flüssigkeiten ergab nach Ermittlung der absoluten Menge der analysierten Stoffe in dieser die folgenden, in Tabelle 3 wiedergegebenen Werte:

**Tabelle 3**

| | Stabisil 19 | Stabisil 23 | Einstufige Verfahrensführung mit H₂SO₄ | Zweistufige Verfahrensführung mit Propylencarbonat und H₂SO₄ |
|---|---|---|---|---|
| Synärese [g] | 4,44 | 24,63 | 7,09 | 0,19 |
| SiO₂ [mg] | 45,7 | 125,6 | 1,4 | 0,04 |
| Na [mg] | 71,3 | 440,9 | 38,3 | 0,10 |
| Al [mg] | 0,4 | / | / | / |

Die Analyse bestätigt im Prinzip die optische Prüfung der erhaltenen Gele insofern, als dass die Synärese-Flüssigkeit, basierend auf das mit der erfindungsgemäßen wässrigen Zusammensetzung mit Schwefelsäure hergestellte Gel, äußerst geringe Mengen an Siliziumdioxid aufweist, was darauf hinweist, dass ein feines und nahezu vollständiges Siliziumoxid-Netzwerk im gebildeten Gel vorliegt. Insgesamt zeigt sich, dass mittels der wässrigen Zusammensetzung hergestellte Gele deutlich weniger Natrium und Siliziumdioxid, insbesondere bei einer zweistufigen Verfahrensführung, in die Umgebung, sei es das umgebende Bodenmaterial oder das Wasser, abgeben, als dies bei Gelen, die nach dem Stand der Technik mit Natriumaluminat-Lösungen oder Metallsalzen hergestellt werden, der Fall ist. Zudem kann zusammenfassend festgehalten werden, dass der pH-Wert der eingesetzten wässrigen Zusammensetzung, wie vorstehend im Zusammenhang mit den Fig. 2a bis 2d und Fig. 3a bis 3c beschrieben, in einem Bereich von etwa 7 bis etwa 9,5 und damit in einem solchen liegt, der nicht grundwasserschädlich ist und insbesondere auch nicht zu einer Übersäuerung des Bodenmaterials führen kann.

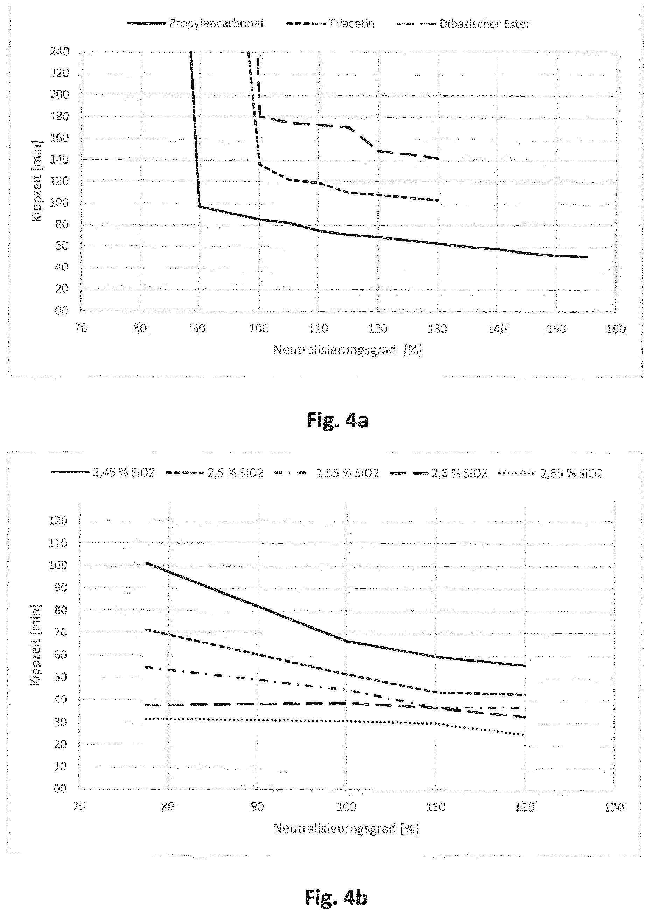

Weiterhin wurde in einem zweistufigen Verfahren eine wässrige Lösung eines Natriumwasserglases mit einem Molmodul von etwa 3,5 und einem Siliziumdioxid-Gehalt von 2,5 Gew.-% in einem ersten Schritt mit 20%iger Schwefelsäure auf einen Vorneutralisationsgrad von 75% eingestellt, und wenige Sekunden nach Herstellung diese erste Mischung mit einem Ester in Reinform auf Neutralisationsgrade von 90% bis 160% eingestellt und dabei die Kippzeiten ermittelt. Der Wassergehalt der Zusammensetzung betrug 95,3 Gew.%, bezogen auf die gesamte Zusammensetzung, der Reaktivanteil (Schwefelsäure und Ester zusammen) etwa 4,5 +/- 0,55 Gew.%, ebenfalls bezogen auf die gesamte Zusammensetzung. Als Ester in Reinform wurden Propylencarbonat, Triacetin und ein dibasische Ester (DBE) unverdünnt eingesetzt. Tabelle 3 oben ist zu entnehmen, dass insbesondere die Synärese noch deutlich gegenüber dem einstufigen Verfahren verbessert ist (bei Einsatz von Propylencarbonat als Ester). Die ermittelten Ergebnisse sind in Fig. 4a dargestellt. Deutlich zeigt sich, dass mit Propylencarbonat (untere Linie in Fig. 4a) die Kippzeit in einem für die Verarbeitung guten Zeitfenster in einem Bereich zwischen etwa 50 min und etwa 100 min über einen weiten Neutralisationsgrad-Bereich eingestellt werden kann. Die Ergebnisse für die beiden anderen Ester sind ebenfalls gut, jedoch liegt die Kippzeit deutlich höher als bei Propylencarbonat.

Schließlich wurde noch ausgehend von dem vorstehend dargelegten zweistufigen Verfahren die Beeinflussung der Kippzeiten bei Einsatz von Propylencarbonat bei unterschiedlichen Siliziumdioxid-Gehalten des eingesetzten Natriumwasserglases untersucht. Dabei wurde mit Schwefelsäure ein Vorneutralisierungsgrad von 77,5% eingestellt und mit Propylencarbonat im zweiten Schritt ein Neutralisierungsgrad in einem Bereich von 90% bis 120%. Dabei wurde unmittelbar nach Zugabe des Proylencarbonats als zweites Reaktiv auch der pH-Wert ermittelt, der für alle Zusammensetzungen in einem Bereich von 9,3 bis 9,5 lag. Wie aus Fig. 4b ersichtlich, konnten Kippzeiten über einen für die Verarbeitung optimalen Zeitraum von etwa 20 min bis etwa 80 min eingestellt werden.

Mit der vorliegenden Erfindung ist somit eine wässrige Zusammensetzung, welche sich zur Herstellung eines Gels, insbesondere Weichgels, insbesondere im Rahmen einer Injektion, für Dichtsohlen oder Baugruben mit Dichtsohlen eignet, zur Verfügung gestellt ist, welche sich durch eine einstellbare Kippzeit auszeichnet, so dass auch in einem kontinuierlichen Austragsverfahren, insbesondere Injektionsverfahren, die Dichtsohle herstellbar ist, und zwar unter Bildung eines Gels, welches in Hinblick auf den pH-Wert verträglich ist und zudem aufgrund Ausbildung verbesserter Netzwerke nur zu einem geringen Austragen von Alkaliionen und Silikaten führt.

## Patentansprüche

1. Wässrige Zusammensetzung, umfassend mindestens ein Wasserglas mit einem Molmodul in einem Bereich von etwa 2,0 bis etwa 4,0, mindestens ein erstes Reaktiv, nämlich mindestens eine anorganische und/oder mindestens eine organische Säure, und mindestens ein zweites Reaktiv, nämlich mindestens einen Ester, ausgewählt aus einer Gruppe umfassend Methylester, Ethylester und/oder Propylester der Ascorbinsäure, Essigsäure, und Dicarbonsäureester mit Kohlenstoffketten mit 1 bis 6 Kohlenstoffatomen, Triglyceride, Propylencarbonat, Triacetin oder dibasische Ester, wobei der pH-Wert der wässrigen Zusammensetzung in einem Bereich von etwa 7 bis etwa 10,5 liegt.

2. Zusammensetzung gemäß Anspruch 1, **dadurch gekennzeichnet, dass** diese einen Siliziumdioxid-Gehalt in einer Menge in einem Bereich von etwa 0,5 Gew.-% bis etwa 5 Gew.-%, bezogen auf die Gesamtmenge der Zusammensetzung, aufweist.

3. Zusammensetzung gemäß einem oder mehreren der vorhergehenden Ansprüche, **dadurch gekennzeichnet, dass** das mindestens eine Wasserglas ausgewählt ist aus einer Gruppe umfassend Kaliumwasserglas und Natriumwasserglas.

4. Zusammensetzung gemäß einem oder mehreren der vorhergehenden Ansprüche, **dadurch gekennzeichnet, dass** ein Molverhältnis zwischen dem mindestens einen Reaktiv und einem Alkalioxid, welches von dem mindestens einen Wasserglas umfasst ist, in einem Bereich von etwa 0,5 : 1 bis etwa 2 : 1 liegt.

5. Zusammensetzung gemäß einem oder mehreren der vorhergehenden Ansprüche, **dadurch gekennzeichnet, dass** diese weiterhin mindestens ein Verdickungsmittel umfasst .

6. Zusammensetzung gemäß einem oder mehreren der vorhergehenden Ansprüche, **dadurch gekennzeichnet, dass** diese einen Gesamtgehalt an Wasser in einer Menge in einem Bereich von etwa 75 Gew.-% bis etwa 96 Gew.-%, bezogen auf die Gesamtmenge der Zusammensetzung, umfasst.

7. Zusammensetzung gemäß einem oder mehreren der vorhergehenden Ansprüche, **dadurch gekennzeichnet, dass** diese das mindestens eine Reaktiv als Reinsubstanz in einer Menge in einem Bereich von etwa 0,25 Gew.-% bis etwa 5 Gew.-%, bezogen auf die Gesamtmenge der Zusammensetzung, umfasst.

8. Zusammensetzung gemäß einem oder mehreren der vorhergehenden Ansprüche, **dadurch gekennzeichnet, dass** diese das mindestens eine Wasserglas mit einem Feststoffgehalt in einer Menge in einem Bereich von etwa 1 Gew.-% bis etwa 6 Gew.-%, bezogen auf die Gesamtmenge der Zusammensetzung, umfasst.

9. Verwendung einer wässrigen Zusammensetzung gemäß einem oder mehreren der Ansprüche 1 bis 8 zur Bildung einer Abdichtung durch Injektion in ein Bodenmaterial unter Bildung eines Gels.

10. Abdichtung, hergestellt mit einer wässrigen Zusammensetzung gemäß einem oder mehreren der Ansprüche 1 bis 8 durch Injektion derselben in Bodenmaterial.

11. Baugrube mit einer Abdichtung in Form einer Dichtsohle, hergestellt mit einer wässrigen Zusammensetzung gemäß einem oder mehreren der Ansprüche 1 bis 8 durch Injektion derselben in Bodenmaterial.

12. Verfahren zur Herstellung einer wässrigen Zusammensetzung gemäß einem oder mehreren der Ansprüche 1 bis 8, wobei in einem ersten Schritt eine erste Mischung aus einer ersten Lösung aus Wasser mit mindestens einem Wasserglas und einer verdünnten zweiten Lösung mindestens eines ersten Reaktives, nämlich mindestens eine anorganische und/oder mindestens eine organische Säure, bis ein pH-Wert in einem Bereich von etwa 9,0 bis etwa 10,8 eingestellt ist, und in einem zweiten Schritt die erste Mischung mit mindestens einem zweiten Reaktiv, nämlich mindestens einem Ester, ausgewählt aus einer Gruppe umfassend Methylester, Ethylester und/oder Propylester der Ascorbinsäure, Essigsäure, und Dicarbonsäureester mit Kohlenstoffketten mit 1 bis 6 Kohlenstoffatomen, Triglyceride, Propylencarbonat, Triacetin oder dibasische Ester, in verdünnter Lösung oder in Reinform versetzt wird, bis ein pH-Wert in einem Bereich von etwa 7 bis etwa 10,5 eingestellt ist.

13. Verfahren gemäß Anspruch 12, **dadurch gekennzeichnet, dass** das Verhältnis der Menge eines Feststoffgehaltes an Wasserglas zu Wasser in der ersten Lösung in einem Bereich von etwa 1:5 bis etwa 1:50 gewählt wird.

14. Verfahren gemäß einem oder mehreren der Ansprüche 12 und 13, **dadurch gekennzeichnet, dass** das Verhältnis der Menge an erstem Reaktiv als Reinsubstanz zu Wasser in der zweiten Lösung in einem Bereich von etwa 1:1 bis etwa 1:125 gewählt wird.

15. Verfahren gemäß einem oder mehreren der Ansprüche 12 bis 14, **dadurch gekennzeichnet, dass** die Mischung in einem Durchflussmischer erfolgt und nachfolgend die Mischung zur Injektion in Bodenmaterial ausgegeben wird.

16. Verfahren gemäß einem oder mehreren der Ansprüche 12 bis 15, **dadurch gekennzeichnet, dass** in einem ersten Schritt die erste Lösung aus Wasser und mindestens einem Wasserglas bereitgestellt wird und in einem zweiten Schritt die verdünnte zweite Lösung des mindestens einen ersten Reaktives über einen Zeitraum zwischen etwa 10 Sekunden und etwa 6 Minuten zugegeben wird, bis ein pH-Wert in einem Bereich von etwa 9 bis etwa 10,5 eingestellt wird.

17. Verfahren gemäß Anspruch 16, **dadurch gekennzeichnet, dass** der zweite Schritt etwa 30 Sekunden bis etwa 48 Stunden nach dem ersten Schritt erfolgt.

## Claims

1. Aqueous composition comprising at least one water glass having a molar modulus in a range of about 2.0 to about 4.0, at least one first reactive, namely at least one inorganic and/or at least one organic acid, and at least one second reactive, namely at least one ester, selected from a group comprising methyl esters, ethyl esters and/or propyl esters of ascorbic acid, acetic acid, and dicarboxylic acid esters having carbon chains with 1 to 6 carbon atoms, triglycerides, propylene carbonate, triacetin or dibasic esters, wherein the pH of the aqueous composition is in a range from about 7 to about 10.5.

2. Composition according to claim 1, **characterized in that** it has a silicon dioxide content in an amount ranging from about 0.5% to about 5% by weight, based on the total amount of the composition.

3. Composition according to one or more of the preceding claims, **characterized in that** the at least one water glass is selected from a group comprising potassium water glass and sodium water glass.

4. Composition according to one or more of the preceding claims, **characterized in that** a molar ratio between the at least one reactive and an alkali oxide comprised by the at least one water glass is in a range from about 0.5 : 1 to about 2 : 1.

5. Composition according to one or more of the preceding claims, **characterized in that** it further comprises at least one thickening agent.

6. Composition according to one or more of the preceding claims, **characterized in that** it comprises a total content of water in an amount ranging from about 75% to about 96% by weight, based on the total amount of the composition.

7. Composition according to one or more of the preceding claims, **characterized in that** it comprises the at least one reactive as a pure substance in an amount ranging from about 0.25 % by weight to about 5 % by weight, based on the total amount of the composition.

8. Composition according to one or more of the preceding claims, **characterized in that** it comprises the at least one water glass having a solids content in an amount ranging from about 1% to about 6% by weight, based on the total amount of the composition.

9. Use of an aqueous composition according to one or more of claims 1 to 8 for forming a seal by injection into a soil material thereby forming a gel.

10. Sealing made with an aqueous composition according to one or more of claims 1 to 8 by injection of said aqueous composition into soil material.

11. Excavation comprising a seal in the form of a bottom sealing made with an aqueous composition according to one or more of claims 1 to 8 by injection thereof into soil material.

12. Method for preparing an aqueous composition according to one or more of claims 1 to 8, wherein in a first step a first mixture of a first solution of water is mixed with at least one water glass and a diluted second solution of at least one first reactive, namely at least one inorganic and/or at least one organic acid, until a pH in a range of about 9.0 to about 10.8 is adjusted, and in a second step, the first mixture is mixed with at least one second reactive, namely at least one ester selected from a group comprising methyl esters, ethyl esters and/or propyl esters of ascorbic acid, acetic acid, and dicarboxylic acid esters having carbon chains with 1 to 6 carbon atoms, triglycerides, propylene carbonate, triacetin or dibasic esters, in dilute solution or in pure form, until a pH in a range from about 7 to about 10.5 is adjusted.

13. Method according to claim 12, **characterized in that** the ratio of the amount of a solids content of water glass to water in the first solution is selected in a range from about 1:5 to about 1:50.

14. Method according to one or more of claims 12 and 13, **characterized in that** the ratio of the amount of said first reactive as pure substance to water in the second solution is selected in a range from about 1:1 to about 1:125.

15. Method according to one or more of claims 12 to 14, **characterized in that** the mixing is carried out in a flow mixer and subsequently the mixture is discharged for injection into soil material.

16. Method according to one or more of claims 12 to 15, **characterized in that** in a first step the first solution of water and at least one water glass is provided and in a second step the diluted second solution of the at least one first reactive is added over a period of time between about 10 seconds and about 6 minutes until a pH in a range from about 9 to about 10.5 is adjusted.

17. Method according to claim 16, **characterized in that** the second step is performed about 30 seconds to about 48 hours after the first step.

## Revendications

1. Composition aqueuse comprenant au moins un verre liquide ayant un module molaire situé sur une plage d'environ 2,0 à environ 4,0, au moins un premier réactif, notamment au moins un acide inorganique et/ou au moins un acide organique, et au moins un deuxième réactif, notamment au moins un ester sélectionné parmi un groupe comprenant un ester méthylique, un ester éthylique et/ou un ester propylique d'acide ascorbique, l'acide acétique, un ester d'acide dicarboxylique avec des chaînes carbonées ayant 1 à 6 atomes de carbone, des triglycérides, le carbonate de propylène, la triacétine ou un ester dibasique, le pH de la composition aqueuse se trouvant sur une plage d'environ 7 à environ 10,5.

2. Composition selon la revendication 1, **caractérisée en ce que** celle-ci présente une teneur en dioxyde de silicium située sur une plage d'environ 0,5% en poids à environ 5% en poids par rapport à la quantité totale de composition.

3. Composition selon une ou plusieurs des revendications précédentes, **caractérisée en ce que** l'au moins un verre liquide est sélectionné parmi un groupe comprenant le silicate de potassium et le silicate de sodium.

4. Composition selon une ou plusieurs des revendications précédentes, **caractérisée en ce qu'**un rapport molaire entre l'au moins un réactif et un oxyde alcalin qui est compris par l'au moins un verre liquide est situé sur une plage d'environ 0,5:1 à environ 2:1.

5. Composition selon une ou plusieurs des revendications précédentes, **caractérisée en ce que** celle-ci comprend en outre au moins un agent épaississant.

6. Composition selon une ou plusieurs des revendications précédentes, **caractérisée en ce que** celle-ci possède une teneur totale située sur une plage d'environ 75% en poids à environ 96% en poids par rapport à la quantité totale de composition.

7. Composition selon une ou plusieurs des revendications précédentes, **caractérisée en ce que** celle-ci comprend au moins un réactif sous la forme de substance pure dans une quantité située sur une plage d'environ 0,25% en poids à environ 5% en poids par rapport à la quantité totale de composition.

8. Composition selon une ou plusieurs des revendications précédentes, **caractérisée en ce que** celle-ci comprend au moins un verre liquide avec une teneur en matière solide située sur une plage d'environ 1% en poids à environ 6% en poids par rapport à la quantité totale de composition.

9. Utilisation d'une composition aqueuse selon une ou plusieurs des revendications 1 à 8 pour créer un système d'étanchéité par injection dans un matériau de sol en formant un gel.

10. Système d'étanchéité fabriqué avec une composition aqueuse selon une ou plusieurs des revendications 1 à 8 par injection de celle-ci dans un matériau de sol.

11. Excavation avec un système d'étanchéité sous forme de semelle étanche, fabriqué avec une composition aqueuse selon une ou plusieurs des revendications 1 à 8 par injection de celle-ci dans un matériau de sol.

12. Procédé pour fabriquer une composition aqueuse selon une ou plusieurs des revendications 1 à 8, selon lequel, dans une première étape, un premier mélange d'une première solution d'eau avec au moins un verre soluble et d'une deuxième solution diluée d'au moins un premier réactif, notamment d'au moins un acide inorganique et/ou d'au moins un acide organique, est ajusté jusqu'à avoir un pH situé sur une plage d'environ 9,0 à environ 10,8, et dans une deuxième étape, le premier mélange est mélangé avec au moins un deuxième réactif, notamment avec au moins un ester sélectionné parmi un groupe comprenant un ester méthylique, un ester éthylique et/ou un ester propylique d'acide ascorbique, l'acide acétique, un ester d'acide dicarboxylique avec des chaînes carbonées ayant 1 à 6 atomes de carbone, des triglycérides, le carbonate de propylène, la triacétine ou un ester dibasique, en solution diluée ou sous forme pure, jusqu'à ce qu'un pH situé sur une plage d'environ 7 à environ 10,5 soit obtenu.

13. Procédé selon la revendication 12, **caractérisé en ce que** le rapport de la quantité de matière solide dans le verre liquide avec l'eau dans la première solution est sélectionné sur une plage d'environ 1:5 à environ 1:50.

14. Procédé selon une ou plusieurs des revendications 12 et 13, **caractérisé en ce que** le rapport de la quantité de premier réactif sous la forme de substance pure avec l'eau dans la deuxième solution est sélectionné sur une plage d'environ 1:15 à environ 1:125.

15. Procédé selon une ou plusieurs des revendications 12 à 14, **caractérisé en ce que** le mélange est effectué dans un mélangeur à flux et que le mélange est ensuite refoulé pour l'injection dans le matériau de sol.

16. Procédé selon une ou plusieurs des revendications 12 à 15, **caractérisé en ce que**, dans une première étape, la première solution est préparée à partir d'eau et d'au moins un verre liquide et, dans une deuxième étape, la deuxième solution diluée de l'au moins un premier réactif est ajoutée pendant un laps de temps situé entre environ 10 secondes et environ 6 minutes, jusqu'à ce qu'un pH situé sur une plage d'environ 9 à environ 10,5 soit obtenu.

17. Procédé selon la revendication 16, **caractérisé en ce que** la deuxième étape a lieu environ 30 secondes à environ 48 heures après la première étape.
